(19) Europäisches Patentamt
European Patent Office
Office européen des brevets

(11) **EP 2 260 704 B1**

(12) **EUROPEAN PATENT SPECIFICATION**

(45) Date of publication and mention of the grant of the patent:
**16.10.2013 Bulletin 2013/42**

(21) Application number: **10010400.9**

(22) Date of filing: **18.03.2003**

(51) Int Cl.:
***A01N 43/40*** *(2006.01)* ***A01N 47/34*** *(2006.01)*
***A01P 3/00*** *(2006.01)* *A01N 61/00* *(2006.01)*
*A01N 57/12* *(2006.01)* *A01N 47/42* *(2006.01)*
*A01N 47/14* *(2006.01)* *A01N 47/04* *(2006.01)*
*A01N 47/02* *(2006.01)* *A01N 43/90* *(2006.01)*
*A01N 43/84* *(2006.01)* *A01N 43/76* *(2006.01)*

(54) **Fungicidal compositions comprising a benzamide and cymoxanil**

Benzamid und Cymoxanil enthaltende Fungizide Zusammensetzungen

Compositions fongicides contenant un benzamide et cymoxanil

(84) Designated Contracting States:
**AT BE BG CH CY CZ DE DK EE ES FI FR GB GR HU IE IT LI LU MC NL PT RO SE SI SK TR**

(30) Priority: **19.03.2002 US 365764 P**

(43) Date of publication of application:
**15.12.2010 Bulletin 2010/50**

(62) Document number(s) of the earlier application(s) in accordance with Art. 76 EPC:
**03716661.8 / 1 484 970**

(73) Proprietor: **E. I. du Pont de Nemours and Company**
**Wilmington, DE 19898 (US)**

(72) Inventors:
- **Foor, Stephen Ray**
  **Hockessin, DE 19707 (US)**
- **Walker, Michael Paul**
  **. (US)**

(74) Representative: **Beacham, Annabel Rose**
**Dehns**
**St Bride's House**
**10 Salisbury Square**
**London**
**EC4Y 8JD (GB)**

(56) References cited:
**WO-A-99/42447** **WO-A1-97/40686**
**GB-A- 1 470 740**

- **ANONYMOUS: "Advantageous Fungicidal Compositions", IP.COM JOURNAL, IP.COM INC., WEST HENRIETTA, NY, US, vol. 1, no. 7, 4799D, 4 June 2001 (2001-06-04), pages 1-4, XP013000437, ISSN: 1533-0001**
- **GRABSKI C ET AL: "QUANTIFICATION OF SYNERGISTIC INTERACTIONS OF FUNGICIDES AGAINST PLASMOPARA AND PHYTOPHTHORA", CROP PROTECTION, ELSEVIER SCIENCE, GB, vol. 6, no. 1, 1 February 1987 (1987-02-01), pages 64-71, XP008043312, ISSN: 0261-2194, DOI: 10.1016/0261-2194(87) 90031-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 260 704 B1

Printed by Jouve, 75001 PARIS (FR)

## Description

BACKGROUND OF THE INVENTION

This invention relates to certain advantageous compositions containing a mixture of benzamides, their N-oxides or agriculturally suitable salts and other fungicides and methods of their use as fungicides.

The control of plant diseases caused by fungal plant pathogens is extremely important in achieving high crop efficiency. Plant disease damage to ornamental, vegetable, field, cereal, and fruit crops can cause significant reduction in productivity and thereby result in increased costs to the consumer. Many products are commercially available for these purposes, but the need continues for new products that are more effective, less costly, less toxic, or environmentally safer.

WO 99/42447 discloses certain benzamides of formula i as fungicides

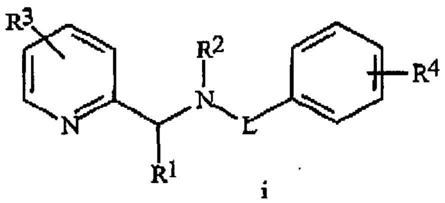

wherein, among others,
$R^1$ is H, alkyl or acyl;
$R^2$ is H or alkyl; and
L is -(C=O)-, $-SO_2-$ or -(C=S)-.

i

WO 02/16322 discloses a novel process for preparing certain benzamides of formula ii that are useful as fungicides

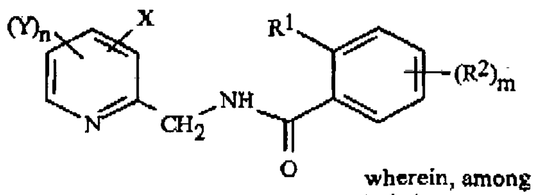

ii

wherein, among others,
X is halogen;
Y is halogen, haloalkyl, alkoxycarbonyl or alkylsulfonyl;
each $R^1$ and $R^2$ is idependently halogen;
m is 0,1 or 2; and
n is 0 to 3.

Fungicides that effectively control plant fungi, particularly of the class Oomycetes, such as *Phytophthora* spp. and *Plasmopara* spp., are in constant demand by growers. Combinations of fungicides are often used to facilitate disease control and to retard resistance development. It is desirable to enhance the activity spectrum and the efficacy of disease control by using mixtures of active ingredients that provide a combination of curative, systemic and preventative control of plant pathogens. Also desirable are combinations that provide greater residual control to allow for extended spray intervals, It is also very desirable to combine fungicidal agents that inhibit different biochemical pathways in the fungal pathogens to retard development of resistance to any one particular plant disease control agent.

It is in all cases particularly advantageous to be able to decrease the quantity of chemical agents released in the environment while ensuring effective protection of crops from diseases caused by plant pathogens. Mixtures of fungicides may provide significantly better disease control than could be predicted based on the activity of the individual components. This synergism has been described as "the cooperative action of two components of a mixture, such that the total effect is greater or more prolonged than the sum of the effects of the two (or more) taken independently" (see Tames, P. M. L., Neth. J. Plant Pathology, (1964), 70, 73-80).

GB 1470740 discloses fungicidal mixtures comprising 2- cyano- N- (ethylcarbomyl)- 2- methoxyiminoacetamide and a second fungicide such as folpet or mancozeb. WO97/40686 discloses fungicidal mixtures comprising a carbamate, a dithiocarbamate and 1- (2- cyano- 2- ) methoxyiminoacetyl)- 3- ethylcarbamide. IP. Com Journal, Vol 1, No. 7, 4799D, 2001, discloses fungicidal compositions comprising famoxadone, cymoxanil and folpet. Grabski et al, in Crop Protection, Vol. 6, No. 1, pages 64- 71, 1987, discloses synergistic fungicidal mixtures of cymoxanil, oxadixyl and mancozeb against *Plasmpara* and *Phytophthora.*

There is a desire to find fungicidal agents that are particularly advantageous in achieving one or more of the preceding objectives.

SUMMARY OF THE INTENTION

This invention provides a composition for controlling plant diseases caused by fungal plant pathogens comprising

(a) at least one compound of Formula I (including all geometric and stereoisomers), *N*-oxides and agriculturally suitable salts thereof:

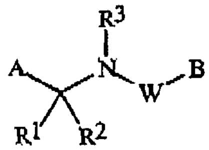

I

wherein
A is a substituted pyridinyl ring;
B is a substituted phenyl ring;
W is C=L or $SO_n$;
L is O or S;
$R^1$ and $R^2$ are each independently H; or $C_1$-$C_6$ alkyl, $C_2$-$C_6$ alkenyl, $C_2$-$C_6$ alkynyl or $C_3$-$C_6$ cycloalkyl, each optionally substituted;
$R^3$ is H; or $C_1$-$C_6$ alkyl, $C_2$-$C_6$ alkenyl, $C_2$-$C_6$ alkynyl, $C_3$-$C_6$ cycloalkyl, $C_2$-$C_{10}$ alkoxyalkyl, $C_2$-$C_6$ alkylcarbonyl, $C_2$-$C_6$ alkoxycarbonyl, $C_2$-$C_6$ alkylaminocarbonyl or $C_3$-$C_8$ dialkylaminocarbonyl; and
n is 1 or 2; and
(b) at least one compound selected from the group consisting of (b3) cymoxanil; and optionally at least one compound selected from the group consisting of:

(b1) alkylenebis(dithiocarbamate) fungicides;
(b2) compounds acting at the $bc_1$ complex of the fungal mitochondrial respiratory electron transfer site;
(b6) phenylamide fungicides;
(b7) pyrimidinone fungicides;
(b8) phthalimides; and
(b9) fosetyl-aluminum.

This invention also relates to a method for controlling plant diseases caused by fungal plant pathogens comprising applying to the plant or portion thereof, or to the plant seed or seedling, a fungicidally effective amount of a composition of the invention.

DETAILS OF THE INVENTION

As noted above, A is a substituted pyridinyl ring and B is a substituted phenyl ring. The term "substituted" in connection with these A or B groups refers to groups that have at least one non-hydrogen substituent that does not extinguish the fungicidal activity. Examples of Formula I incorporating said pyridinyl rings in which A is substituted with 1 to 4 $R^5$, B is substituted with 1 to 4 $R^6$ include the rings illustrated in Exhibit 1 wherein m and p are independently integers from 1 to 4. Note that the attachment point between $(R^5)_m$ and A and $(R^6)_p$ and B is illustrated as floating, and $(R^5)_m$ and $(R^6)_p$ can be attached to any available carbon atom of the A and B rings respectively.

Exhibit 1

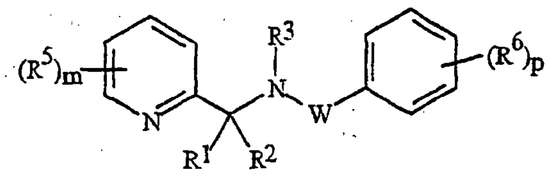

I-1

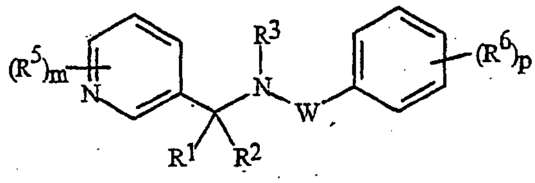

I-2

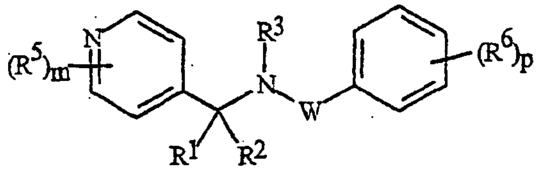

I-3

Examples of $R^5$ when attached to A and $R^6$ when attached to B include:

each $R^5$ and $R^6$ is independently $C_1$-$C_6$ alkyl, $C_2$-$C_6$ alkenyl, $C_2$-$C_6$ alkynyl, $C_3$-$C_6$ cycloalkyl, $C_1$-$C_6$ haloalkyl, $C_2$-$C_6$ haloalkenyl, $C_2$-$C_6$ haloalkynyl, $C_3$-$C_6$ halocycloalkyl, halogen, CN, $CO_2H$, $CONH_2$, $NO_2$, hydroxy, $C_1$-$C_4$ alkoxy, $C_1$-$C_4$ haloalkoxy, $C_1$-$C_4$ alkylthio, $C_1$-$C_4$ alkylsulfinyl $C_1$-$C_4$ alkylsulfonyl, $C_1$-$C_4$ haloalkylthio, $C_1$-$C_4$ haloalkylsulfinyl $C_1$-$C_4$ haloalkylsulfonyl, $C_1$-$C_4$ alkylamino, $C_2$-$C_8$ dialkylamino, $C_3$-$C_6$ cycloalkylamino, $C_2$-$C_6$ alkylcarbonyl, $C_2$-$C_6$ alkoxycarbonyl, $C_2$-$C_6$ alkylaminocarbonyl, $C_3$-$C_8$ dialkylaminocarbonyl or $C_3$-$C_6$ trialkylsilyl; or

each $R^5$ and $R^6$ is independently a phenyl, a benzyl, a phenoxy, a 5- or 6-membered heteroaromatic ring or a 5- or 6-membered nonaromatic heterocyclic ring, each ring optionally substituted with from one to three substituents independently selected from $R^7$; or

two $R^6$ attached to contiguous carbon atoms are taken together with said carbon atoms to form a fused phenyl ring, a fused 5- or 6-membered nonaromatic carbocyclic ring, a fused 5- or 6-membered heteroaromatic ring or a fused 5- or 6-membered nonaromatic heterocyclic ring, each fused ring optionally substituted with from one to four substituents independently selected from $R^7$;

each $R^7$ is independently $C_1$- $C_4$ alkyl, $C_2$- $C_4$ alkenyl, $C_2$- $C_4$- alkynyl, $C_3$- $C_6$ cycloalkyl, $C_1$- $C_4$ haloalkyl, $C_2$- $C_4$ haloalkenyl, $C_2$- $C_4$ haloalkynyl, $C_3$- $C_6$ halocycloalkyl, halogen, CN, $NO_2$, $C_1$- $C_4$ alkoxy, $C_1$- $C_4$ haloalkoxy, $C_1$- $C_4$ alkylthio, $C_1$- $C_4$ alkylsulfinyl, $C_1$- $C_4$ alkylsulfonyl, $C_1$- $C_4$ alkylamino, $C_2$- $C_8$ dialkylamino, $C_3$- $C_6$ cycloalkylamino, $C_3$- $C_6$ (alkyl) cycloalkylamino, $C_2$- $C_4$ alkylcarbonyl, $C_2$- $C_6$ alkoxycarbonyl, $C_2$- $C_6$ alkylaminocarbonyl, $C_3$- $C_8$ dialkylaminocarbonyl or $C_3$- $C_6$ trialkylsilyl.

As noted above, $R^1$ and $R^2$ are each independently H; or $C_1$-$C_6$ alkyl, $C_2$-$C_6$ alkenyl, $C_2$-$C_6$ alkynyl or $C_3$-$C_6$ cycloalkyl, each optionally substituted. The term "optionally substituted" in connection with these $R^1$ and $R^2$ groups refers to groups that are unsubstituted or have at least one non-hydrogen substituent that does not extinguish the fungicidal activity possessed by the unsubstituted analog. Examples of optionally substituted $R^1$ and $R^2$ groups are those that are optionally substituted with one or more substituents selected from the group consisting of halogen, CN, $NO_2$, hydroxy, $C_1$-$C_4$ alkoxy, $C_1$-$C_4$ alkylthio, $C_1$-$C_4$ alkylsulfinyl, $C_1$-$C_4$ alkylsulfonyl, $C_2$-$C_4$ alkoxycarbonyl, $C_1$-$C_4$ alkylamino, $C_2$-$C_8$ dialkylamino and $C_3$-$C_6$ cycloalkylamino. Although these substituents are listed in the examples above, it is noted that they do not need to be present since they are optional substituents. Of note are $R^1$ and $R^2$ groups that are optionally substituted with one to four substituents selected from the group above.

Examples of *N*-oxides of Formula I are illustrated as I-4 through I-6 in Exhibit 2, wherein $R^1$, $R^2$, $R^3$, $R^5$, $R^6$, W, m and p are as defined above.

Exhibit 2

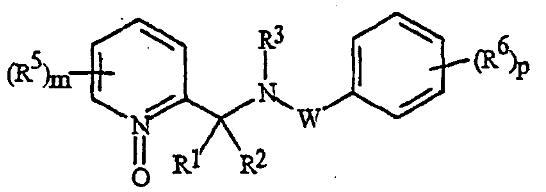

I-4

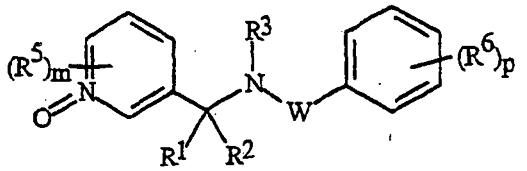

I-5

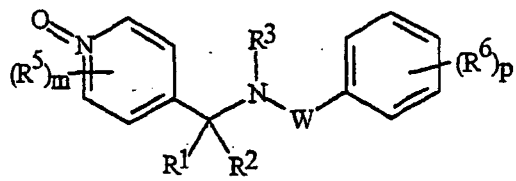

I-6

In the above recitations, the term "alkyl", used either alone or in compound words such as "alkylthio" or "haloalkyl" includes straight- chain or branched alkyl, such as, methyl, ethyl, *n*- propyl, *i*- propyl, or the different butyl, pentyl or hexyl isomers. "Alkenyl" includes straight chain or branched alkenes such as ethenyl, 1- propenyl, 2- propenyl, and the different butenyl, pentenyl and hexenyl isomers. "Alkenyl" also includes polyenes such as 1, 2- propadienyl and 2, 4- hexadienyl. "Alkynyl" includes straight chain or branched alkynes such as ethynyl, 1- propynyl, 2- propynyl and the different butynyl, pentynyl and hexynyl isomers. "Alkynyl" can also include moieties comprised of multiple triple bonds such as 2, 5-hexadiynyl. "Alkoxy" includes, for example, methoxy, ethoxy, *n*- propyloxy, isopropyloxy and the different butoxy, pentoxy and hexyloxy isomers. "Alkoxyalkyl" denotes alkoxy substitution on alkyl. Examples of "akoxyakyl" include $CH_3OCH_2$, $CH_3OCH_2CH_2$, $CH_3CH_2OCH_2$, $CH_3CH_2CH_2CH_2OCH_2$ and $CH_3CH_2OCH_2CH_2$. "Alkoxyalkoxy" denotes alkoxy substitution on alkoxy. The term "Alkenyloxy" includes straight chain or branched alkenyloxy moieties. Examples of "alkenyloxy" include $H_2C{=}CHCH_2O$, $(CH_3)_2C{=}CHCH_2O$, $(CH_3)$ $CH{=}CHCH_2O$, $(CH_3)$ $CH{=}C$ $(CH_3)$ $CH_2O$ and $CH_2{=}CHCH_2CH_2O$. "Alkynyloxy" includes straight chain or branched alkynyloxy moieties. Examples of "alkynyloxy" include $HC{\equiv}CCH_2O$, $CH_3C{\equiv}CCH_2O$ and $CH_3C{\equiv}CCH_2CH_2O$. "Alkylthio" includes branched or straight chain alkylthio moieties such as methylthio, ethylthio, and the different propylthio, butylthio, pentylthio and hexylthio isomers. "Alkylsulfinyl" includes both enantiomers of an alkylsulfinyl group. Examples of "alkylsulfinyl" include $CH_3S$ (O), $CH_3CH_2S$ (O), $CH_3CH_2CH_2S$ (O), $(CH_3)_2CHS$ (O) and the different butylsulfinyl, pentylsulfinyl and hexylsulfinyl isomers. Examples of "alkylsulfonyl" include $CH_3S$ $(O)_2$, $CH_3CH_2S$ $(O)_2$, $CH_3CH_2CH_2S$ $(O)_2$, $(CH_3)_2CHS$ $(O)_2$ and the different butylsulfonyl, pentylsulfonyl and hexylsulfonyl isomers. "Alkylamino", "dialkylamino", "alkenylthio", "alkenylsulfinyl", "alkenylsulfonyl", "alkynylthio", "alkynylsulfinyl", "alkynylsulfonyl", and the like, are defined analogously to the above examples. "Cycloalkyl" includes, for example, cyclopropyl, cyclobutyl, cyclopentyl, and cyclohexyl. The term "cycloalkoxy" includes the same groups linked through an oxygen atom such as cyclopentyloxy and cyclohexyloxy.

The term "halogen", either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include $F_3C$, $ClCH_2$, $CF_3CH_2$ and $CF_3CCl_2$. The terms "haloalkenyl", "haloalkynyl", "haloalkoxy", "haloalkylthio", and the like, are defined analogously to the term "haloalkyl". Examples of "haloalkenyl" include $(Cl)_2C{=}CHCH_2$ and $CF_3CH_2CH{=}CHCH_2$. Examples of "haloalkynyl" include $HC{\equiv}CCHCl$, $CF_3C{\equiv}C$, $CCl_3C{\equiv}C$ and $FCH_2C{\equiv}CCH_2$. Examples of "haloalkoxy" include $CF_3O$, $CCl_3CH_2O$, $HCF_2CH_2CH_2O$ and $CF_3CH_2O$. Examples of "haloalkylthio" include $CCl_3S$, $CF_3S$, $CCl_3CH_2S$ and $ClCH_2CH_2CH_2S$. Examples of "haloalkylsulfinyl" include $CF_3S$ (O), $CCl_3S$ (O), $CF_3CH_2S$ (O) and $CF_3CF_2S$ (O) . Examples of "haloalkylsulfonyl" include $CF_3S$ $(O)_2$, $CCl_3S$ $(O)_2$, $CF_3CH_2S$ $(O)_2$ and $CF_3CF_2S$ $(O)_2$. Examples of "alkylcarbonyl" include C (O) $CH_3$, C (O) $CH_2CH_2CH_3$ and C (O) CH $(CH_3)_2$. Examples, of "alkoxycarbonyl" include $CH_3OC$ (=O), $CH_3CH_2OC$ (=O), $CH_3CH_2CH_2OC$ (=O), $(CH_3)_2CHOC$ (=O) and the different butoxy- or pentoxycarbonyl isomers.

"Aromatic" indicates that each of the ring atoms is essentially in the same plane and has a *p*-orbital perpendicular to the ring plane, and in which $(4n + 2)$ $\pi$ electrons, when n is 0 or a positive integer, are associated with the ring to comply with Hückel's rule. The term "aromatic carbocyclic ring" includes fully aromatic carbocycles (e.g. phenyl). The term "nonaromatic carbocyclic ring" denotes fully saturated carbocycles as well as partially or fully unsaturated carbocycles where the Hückel rule is not satisfied. The term "hetero" in connection with rings refers to a ring in which at least one ring atom is not carbon and which can contain 1 to 4 heteroatoms independently selected from the group consisting

of nitrogen, oxygen and sulfur, provided that each ring contains no more than 4 nitrogens, no more than 2 oxygens and no more than 2 sulfurs. The terms "heteroaromatic ring includes fully aromatic heterocycles. The term "nonaromatic heterocyclic ring" denotes fully saturated heterocycles as well as partially or fully unsaturated heterocycles where the Hückel rule is not satisfied. The heterocyclic ring can be attached through any available carbon or nitrogen by replacement of a hydrogen on said carbon or nitrogen.

One skilled in the art will appreciate that not all nitrogen containing heterocycles can form *N*-oxides since the nitrogen requires an available lone pair for oxidation to the oxide; one skilled in the art will recognize those nitrogen containing heterocycles which can form *N*-oxides. One skilled in the art will also recognize that tertiary amines can form *N*-oxides. Synthetic methods for the preparation of *N*-oxides of heterocycles and tertiary amines are very well known by one skilled in the art including the oxidation of heterocycles and tertiary amines with peroxy acids such as peracetic and *m*-chloroperbenzoic acid (MCPBA), hydrogen peroxide, alkyl hydroperoxides such as *t*-butyl hydroperoxide, sodium perborate, and dioxiranes such as dimethydioxirane. These methods for the preparation of *N*-oxides have been extensively described and reviewed in the literature, see for example: T. L. Gilchrist in Comprehensive Organic Synthesis, vol. 7, pp 748-750, S. V. Ley, Ed., Pergamon Press; M. Tisler and B. Stanovnik in Comprehensive Heterocyclic Chemistry, vol. 3, pp 18-20, A. J. Boulton and A. McKillop, Eds., Pergamon Press; M. R Grimmett and B. R. T. Keene in Advances in Heterocyclic Chemistry, voL 43, pp 149-161, A. R. Katritzky, Ed., Academic Press; M. Tisler and B. Stanovnik in Advances in Heterocyclic Chemistry, vol. 9, pp 285-291, A. R. Katritzky and A. J. Boulton, Eds., Academic Press; and G. W. H. Cheeseman and E. S. G. Werstiuk in Advances in Heterocyclic Chemistry, vol. 22, pp 390-392, A. R. Katritzky and A. J. Boulton, Eds., Academic Press.

The total number of carbon atoms in a substituent group is indicated by the "$C_i$- $C_j$" prefix where i and j are numbers from 1 to 8. For example, $C_1$- $C_3$ alkylsulfonyl designates methylsulfonyl through propylsulfonyl; $C_2$ alkoxyalkyl designates $CH_3OCH_2$; $C_3$ alkoxyalkyl designates, for example, $CH_3CH\ (OCH_3)$, $CH_3OCH_2CH_2$ or $CH_3CH_2OCH_2$; and $C_4$ alkoxyalkyl designates the various isomers of an alkyl group substituted with an alkoxy group containing a total of four carbon atoms, examples including $CH_3CH_2CH_2OCH_2$ and $CH_3CH_2OCH_2CH_2$.

When a compound is substituted with a substituent bearing a subscript that indicates the number of said substituents can exceed 1, said substituents (when they exceed 1) are independently selected from the group of defined substituents. Further, when the subscript indicates a range, e.g. $(R)_{i-j}$, then the number of substituents may be selected from the integers between i and inclusive.

When a group contains a substituent which can be hydrogen, for example $R^1$ or $R^2$ then, when this substituent is taken as hydrogen, it is recognized that this is equivalent to said group being unsubstituted.

Compounds of Formula I can exist as one or more stereoisomers. The various stereoisomers include enantiomers, diastereomers, atropisomers and geometric isomers. One skilled in the art will appreciate that one stereoisomer may be more active and/or may exhibit beneficial effects when enriched relative to the other stereoisomer(s) or when separated from the other stereoisomer(s). Additionally, the skilled artisan knows how to separate, enrich, and/or to selectively prepare said stereoisomers. Accordingly, the present invention comprises compostions comprising compounds selected from Formula I, *N*-oxides and agriculturally suitable salts thereof. The Compounds of Formula I may be present as a mixture of stereoisomers, individual stereoisomers, or as an optically active form. In particular, when $R^1$ and $R^2$ of Formula I are different, then said Formula possesses a chiral center at the carbon to which $R^1$ and $R^2$ are commonly bonded.

This invention includes racemic mixtures of equal parts of Formula I' and Formula I".

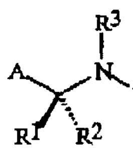

I'

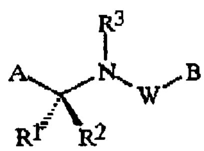

I"

wherein A, B W, $R^1$, $R^2$ and $R^3$ are as defined above.

In addition, this invention includes compositions that are enriched compared to the racemic mixture in an enantiomer of the Formula I' or Formula I". This invention also includes compositions wherein component (a) is enriched in a component (a) enantiomer of Formula I' compared to the racemic mixture of component (a). Included are compositions comprising the essentially pure enantiomers of Formula I'. This invention also includes compositions wherein component (a) is enriched in a component (a) enantiomer of Formula I" compared to the racemic mixture of component (a). Included are compositions comprising the essentially pure enantiomers of Formula I".

When enantiomerically enriched, one enantiomer is present in greater amounts that the other and the extent of enrichment can be defined by an expression of enantiomer excess ("ee"), which is defined as 100 (2x- 1) where x is

the mole fraction of the dominant enantiomer in the enantiomer mixture (e.g., an ee of 20% corresponds to a 60: 40 ratio of enantiomers) .

The more active enantiomer with respect to the relative positions of $R^1$, $R^2$, A and the rest of the molecule bonded through nitrogen corresponds to the configuration of the enantiomer of Formula I that, when in a solution of $CDCl_3$, rotates plane polarized light in the (+) or *dextro* direction.

Preferably there is at least a 50% enantiomeric excess; more preferably at least a 75 % enantiomeric excess; still more preferably at least a 90% enantiomeric excess; and the most preferably at least a 94% enantiomeric excess of the more active isomer of Formula I. Of particular note are enantiomerically pure embodiments of the more active isomer of Formula I.

The salts of the compounds of Formula I include acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. The salts of the compounds of Formula I also include those formed with organic bases (e.g., pyridine, ammonia, or triethylamine) or inorganic bases (e.g., hydrides, hydroxides, or carbonates of sodium, potassium, lithium, calcium, magnesium or barium) when the compound contains an acidic group such as a carboxylic acid or phenol.

Preferred compositions of the invention, wherein (a) comprises compounds of Formula I, for reasons of better activity and/or ease of synthesis are:

Preferred 1. Preferred are compositions wherein in Formula I
A is a pyridinyl ring substituted with from 1 to 4 $R^5$;
B is a phenyl ring substituted with from 1 to 4 $R^6$;
W is C=O;
$R^1$ and $R^2$ are each independently H; or $C_1$- $C_6$ alkyl, $C_2$- $C_6$ alkenyl, $C_2$- $C_6$ alkynyl or $C_3$- $C_6$ cycloalkyl, each optionally substituted with one or more substituents selected from the group consisting of halogen, CN, $NO_2$, hydroxy, $C_1$- $C_4$ alkoxy, $C_1$- $C_4$ alkylthio, $C_1$- $C_4$ alkylsulfinyl $C_1$- $C_4$ alkylsulfonyl, $C_2$- $C_4$ alkoxycarbonyl, $C_1$- $C_4$ alkylamino, $C_2$- $C_8$ dialkylamino and $C_3$- $C_6$ cycloalkylamino; $R^3$ is H; and
each $R^3$ and $R^6$ is independently $C_1$- $C_6$ alkyl, $C_2$- $C_6$ alkenyl, $C_2$- $C_6$ alkynyl, $C_3$- $C_6$ cycloalkyl, $C_1$- $C_6$ haloalkyl, $C_2$- $C_6$ haloalkenyl, $C_2$- $C_6$ haloalkynyl, $C_3$- $C_6$ halocycloalkyl, halogen, CN, $CO_2H$, $CONH_2$, $NP_2$, hydroxy, $C_1$- $C_4$ alkoxy, $C_1$- $C_4$ haloalkoxy, $C_1$- $C_4$ alkylthio, $C_1$- $C_4$ alkylsulfinyl, $C_1$- $C_4$ alkylsulfonyl, $C_1$- $C_4$ haloalkylthio, $C_1$- $C_4$ haloalkylsulfinyl, $C_1$- $C_4$ haloalkylsulfonyl, $C_1$- $C_4$ alkylamino, $C_2$- $C_8$ dialkylamino, $C_3$- $C_6$ cycloalkylamino, $C_2$- $C_6$ alkylcarbonyl, $C_2$- $C_6$ alkoxycarbonyl, $C_2$- $C_6$ alkylaminocarbonyl, $C_3$- $C_8$ dialkylaminocarbonyl or $C_3$- $C_6$ trialkylsilyl; or
each $R^5$ and $R^6$ is independently a phenyl, a benzyl, a phenoxy, a 5- or 6- membered heteroaromatic ring or a 5- or 6- membered nonaromatic heterocyclic ring, each ring optionally substituted with one to three substituents independently selected from $R^7$; or
two $R^6$ attached to contiguous carbon atoms are taken together with said carbon atoms to form a fused phenyl ring, a fused 5- or 6- membered nonaromatic carbocyclic ring, a fused 5- or 6- membered heteroaromatic ring or a fused 5- or 6- membered nonaromatic heterocyclic ring, each fused ring optionally substituted with one to four substituents independently selected from $R^7$; and
each $R^7$ is independently $C_1$- $C_4$ alkyl, $C_2$- $C_4$ alkenyl, $C_2$- $C_4$ alkynyl, $C_3$- $C_6$ cycloalkyl, $C_1$- $C_4$ haloalkyl, $C_2$- $C_4$ haloalkenyl, $C_2$- $C_4$ haloalkynyl, $C_3$- $C_6$ halocycloalkyl, halogen, CN, $NO_2$, $C_1$- $C_4$ alkoxy, $C_1$- $C_4$ haloalkoxy, $C_1$- $C_4$ alkylthio, $C_1$- $C_4$ alkylsulfinyl $C_1$- $C_4$ alkylsulfonyl, $C_1$- $C_4$ alkylamino, $C_2$- $C_8$ dialkylamino, $C_3$- $C_6$ cycloalkylamino, $C_3$- $C_6$ (alkyl) cycloalkylamino, $C_2$- $C_4$ alkylcarbonyl, $C_2$- $C_6$ alkoxycarbonyl, $C_2$- $C_6$ alkylaminocarbonyl, $C_3$- $C_8$ dialkylaminocarbonyl or $C_3$- $C_6$ trialkylsilyl.

Of note are compositions of Preferred 1 wherein A is a substituted 3-pyridinyl ring.

Preferred 2. Compositions of Preferred 1 wherein
A is a 2-pyridinyl ring substituted with from 1 to 4 $R^5$; and
B is substituted with from 1 to 4 $R^6$, with at least one $R^6$ located in a position *ortho* to the link with W.

Of note are compositions wherein each $R^6$ is independently F, Cl, Br, I, $CH_3$, $OCH_3$, $OCF_3$, $OCHF_2$, $CF_3$ or $NO_2$. Also of note are compositions wherein at least one $R^6$ is iodo. Preferred 3. Compositions of Preferred 2 wherein B is substituted with an $R^6$ at each position *ortho* to the link with W, and optionally one additional $R^6$, and each $R^6$ is independently F, Cl, Br, I, $CH_3$, $OCH_3$ or $CF_3$.

Of note are compositions wherein each $R^6$ is either halogen or methyl.

Preferred 4. Compositions of Preferred 3 wherein B is substituted with one $R^6$ as a Cl located at the 2-position *ortho* to the link with W, another $R^6$ is selected from Cl or methyl and is located at the 6-position *ortho* to the link with W and a third optional $R^6$ is methyl at the 4-position.

Preferred 5. Compositions of Preferred 4 wherein A is 3- chloro- 5- $CF_3$- 2- pyridinyl.

Preferred compositions of this invention include those of Preferred 1 through Preferred 5 wherein $R^1$ is H and

$R^2$ is H or $CH_3$. More preferred are compositions of Preferred 1 through Preferred 5 wherein $R^1$ is H and $R^2$ is $CH_3$.

Specifically preferred are compositions comprising a compound selected from the group consisting of
2, 6- dichloro- *N*- [[3- chloro- 5- (trifluoromethyl)- 2- pyridinyl] methyl] benzamide,
2, 6- dichloro- *N*- [1- [3- chloro- 5- (trifluoromethyl)- 2- pyridinyl) ethyl] benzamide,
2, 6- dichloro- *N*- [[3- chloro- 5- (trifluoromethyl)- 2- pyridinyl] methyl]- 4- methylbenzamide,
2, 6- dichloro- *N*- [1- [3- chloro- 5- (trifluoromethyl)- 2- pyridinyl] ethyl]- 4- methylbenzamide,
2, 6- dichloro- *N*- [(3, 5- dichloro- 2- pyridinyl) methyl] benzamide,
2, 6- dichloro- *N*- [1- (3, 5- dichloro- 2- pyridinyl) ethyl] benzamide,
2, 6- dichloro- *N*- [(3, 5- dichloro- 2- pyridinyl) methyl]- 4- methylbenzamide, and
2, 6- dichloro- *N*- [1- (3, 5- dichloro- 2- pyridinyl) ethyl]- 4- methylbenzamide.

Of note are compositions comprising a compound selected from the group consisting of
2, 6- dichloro- *N*- [[3- chloro- 5- (trifluoromethyl)- 2- pyridinyl] methyl] benzamide (also known as *N*- [(3- chloro- 5- trifluoromethyl- 2- pyridyl) methyl]- 2, 6- dichlorobenzamide),
*N*- [[(3- chloro- 5- (trifluoromethyl)- 2- pyridinyl] methyl]- 2, 6- difluorobenzamide (also known as *N*- [(3- chloro- 5- tifluoromethyl- 2- pyridyl) methyl]- 2, 6- difluorobenzamide),
2- chloro- *N*- [[3- chloro- 5- (tifluoromethyl)- 2- pyridinyl] methyl]- 6- fluorobenzamide (also known as *N*- [(3- chloro- 5- trifluoromethyl- 2- pyridyl) methyl]- 2- chloro- 6- fluorobenzamide),
*N*- [[(3- chloro- 5- (trifluoromethyl)- 2- pyridinyl] methyl]- 2, 3- difluorobenzamide (also known as *N*- [(3- chloro- 5- trifluoromethyl- 2- pyridyl) methyl]- 2, 3- difluorobenzamide),
*N*- [[(3- chloro- 5- (tifluoromethyl)- 2- pyridinyl] methyl]- 2, 4, 6- tifluorobenzamide (also known as *N*- [(3- chloro- 5- trifluoromethyl- 2- pyridyl) methyl]- 2, 4, 6- trifluorobenzamide), and 2- bromo- 6- chloro- *N*- [[3- chloro- 5- (trifluoromethyl)- 2- pyridinyl] methyl] benzamide (also known as *N*- [(3- chloro- 5- trifluoromemyl- 2- pyridyl) methyl]- 2- bromo- 6- chlorobenzamide) .

This invention also relates to a method for controlling plant diseases caused by fungal plant pathogens comprising applying to the plant or portion thereof, or to the plant seed or seedling, a fungicidally effective amount of the composition of the invention (i.e., as a composition described herein). The preferred methods of use are those involving the above-preferred compositions.

Compounds of Formula I can be prepared by one or more of the methods and variations described in WO99/42447 (See e.g., Example 4). Some compounds of Formula I can also be prepared by methods described in WO02/16322.

Examples of compounds of Formula I suitable for use in component (a) of the compositions of this invention include the following compounds of Tables 1-7. The following abbreviations are used in the Tables which follow: Me is methyl, Et is ethyl, Ph is phenyl, OMe is methoxy, OEt is ethoxy, CN is cyano, $NO_2$ is nitro. The substituents Q and R are equivalent to independent $R^5$ substituents that have been located in the positions indicated. The substituents T, U and V are equivalent to independent $R^6$ substituents that have been located in the positions indicated.

Table 1

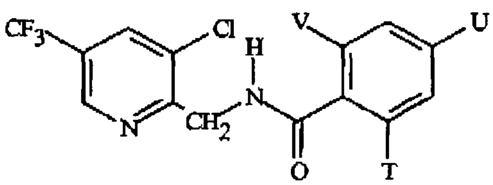

| T | U | V | T | U | V | T | U | V | T | U | V |
|---|---|---|---|---|---|---|---|---|---|---|---|
| Me | Me | Me | OMe | Me | Me | Cl | $NO_2$ | Me | Br | Me | Me |
| Mc | Me | F | OMe | Me | F | Cl | $NO_2$ | F | Br | Me | F |
| Me | Me | Cl | OMe | Me | Cl | Cl | $NO_2$ | Cl | Br | Me | Cl |
| Me | Me | Br | OMe | Me | Br | Cl | $NO_2$ | Br | Br | Me | Br |
| Me | Me | $CF_3$ | OMe | Me | $CF_3$ | Cl | $NO_2$ | $CF_3$ | Br | Me | $CF_3$ |
| Me | Me | $NO_2$ | OMe | Me | $NO_2$ | Cl | $NO_2$ | $NO_2$ | Br | Me | $NO_2$ |
| Me | Me | OMe | OMe | Me | OMe | Cl | $NO_2$ | OMe | Br | Me | OMe |
| F | Me | Me | OMe | F | Me | $CF_3$ | OMe | Me | $CF_3$ | Me | Me |
| F | Me | F | OMe | F | F | $CF_3$ | OMe | F | $CF_3$ | Me | F |
| F | Me | Cl | OMe | F | Cl | $CF_3$ | OMe | Cl | $CF_3$ | Me | Cl |
| F | Me | Br | OMe | F | Br | $CF_3$ | OMe | Br | $CF_3$ | Me | Br |

(continued)

| T | U | V | T | U | V | T | U | V | T | U | V |
|---|---|---|---|---|---|---|---|---|---|---|---|
| F | Me | $CF_3$ | OMe | F | $CF_3$ | $CF_3$ | OMe | $CF_3$ | $CF_3$ | Me | $CF_3$ |
| F | Me | $NO_2$ | OMe | F | $NO_2$ | F | OMe | Me | CF3 | Me | $NO_2$ |
| F | Me | OMe | OMe | F | OMe | F | OMe | F | $CF_3$ | Me | OMe |
| Cl | Me | Me | OMe | Cl | Me | F | OMe | Cl | $NO_2$ | Me | Me |
| Cl | Me | F | OMe | Cl | F | F | OMe | Br | $NO_2$ | Me | F |
| Cl | Me | Cl | OMe | Cl | Cl | F | OMe | $CF_3$ | $NO_2$ | Me | Cl |
| Cl | Me | Br | OMe | Cl | Br | F | OMe | $NO_2$ | $NO_2$ | Me | Br |
| Cl | Me | $CF_3$ | OMe | Cl | $CF_3$ | F | OMe | OMe | $NO_2$ | Me | $CF_3$ |
| Cl | Me | $NO_2$ | OMe | Cl | $NO_2$ | $CF_3$ | OMe | $NO_2$ | $NO_2$ | Me | $NO_2$ |
| Cl | Me | OMe | OMe | Cl | OMe | $CF_3$ | OMe | OMe | $NO_2$ | Me | OMe |
| Me | F | Me | OMe | H | Me | Br | OMe | $NO_2$ | Br | F | Me |
| Me | F | F | OMe | H | F | Br | OMe | OMe | Br | F | F |
| Me | F | Cl | OMe | H | Cl | $NO_2$ | $NO_2$ | Me | Br | F | Cl |
| Me | F | Br | OMe | H | OMe | $NO_2$ | $NO_2$ | F | Br | F | Br |
| Me | F | $CF_3$ | OMe | OMe | $CF_3$ | $NO_2$ | $NO_2$ | Cl | Br | F | $CF_3$ |
| Me | F | $NO_2$ | OMe | OMe | $NO_2$ | $NO_2$ | $NO_2$ | Br | Br | F | $NO_2$ |
| Me | F | OMe | OMe | OMe | OMe | $NO_2$ | $NO_2$ | $CF_3$ | Br | F | OMe |
| F | F | Me | OMe | Br | Me | $NO_2$ | $NO_2$ | $NO_2$ | $CF_3$ | F | Me |
| F | F | F | OMe | Br | F | $NO_2$ | $NO_2$ | OMe | $CF_3$ | F | F |
| F | F | Cl | OMe | Br | Cl | Br | OMe | Me | $CF_3$ | F | Cl |
| F | F | Br | OMe | Br | Br | Br | OMe | F | $CF_3$ | F | Br |
| F | F | $CF_3$ | OMe | Br | $CF_3$ | Br | OMe | Cl | $CF_3$ | F | $CF_3$ |
| F | F | $NO_2$ | OMe | Br | $NO_2$ | Br | OMe | Br | $CF_3$ | F | $NO_2$ |
| F | F | OMe | OMe | Br | OMe | Br | OMe | $CF_3$ | $CF_3$ | F | OMe |
| Cl | F | Me | OMe | $CF_3$ | Me | Me | $NO_2$ | Me | $NO_2$ | F | Me |
| Cl | F | F | OMe | $CF_3$ | F | Me | $NO_2$ | F | $NO_2$ | F | F |
| Cl | F | Cl | OMe | $CF_3$ | Cl | Me | $NO_2$ | Cl | $NO_2$ | F | Cl |
| Cl | F | Br | OMe | $CF_3$ | Br | Me | $NO_2$ | Br | $NO_2$ | F | Br |
| Cl | F | $CF_3$ | OMe | $CF_3$ | $CF_3$ | Me | $NO_2$ | $CF_3$ | $NO_2$ | F | $CF_3$ |
| Cl | F | $NO_2$ | OMe | $CF_3$ | $NO_2$ | Me | $NO_2$ | $NO_2$ | $NO_2$ | F | $NO_2$ |
| Cl | F | OMe | OMe | $CF_3$ | OMe | Me | $NO_2$ | OMe | $NO_2$ | F | OMe |
| Me | Cl | Me | OMe | $NO_2$ | Me | F | $NO_2$ | Me | Br | Cl | Me |
| Me | Cl | F | OMe | $NO_2$ | F | F | $NO_2$ | F | Br | Cl | F |
| Me | Cl | Cl | OMe | $NO_2$ | Cl | F | $NO_2$ | Cl | Br | Cl | Cl |
| Me | Cl | Br | OMe | $NO_2$ | Br | F | $NO_2$ | Br | Br | Cl | Br |
| Me | Cl | $CF_3$ | OMe | $NO_2$ | $CF_3$ | F | $NO_2$ | $CF_3$ | Br | Cl | $CF_3$ |
| Me | Cl | $NO_2$ | OMe | $NO_2$ | $NO_2$ | F | $NO_2$ | $NO_2$ | Br | Cl | $NO_2$ |
| Me | Cl | OMe | OMe | $NO_2$ | OMe | F | $NO_2$ | OMe | Br | Cl | OMe |
| F | Cl | Me | OMe | H | Br | Br | H | Me | $CF_3$ | Cl | Me |
| F | Cl | F | OMe | H | $CF_3$ | Br | H | F | $CF_3$ | Cl | F |
| F | Cl | Cl | OMe | H | $NO_2$ | Br | H | Cl | $CF_3$ | Cl | Cl |
| F | Cl | Br | OMe | OMe | Me | Br | H | Br | $CF_3$ | Cl | Br |
| F | Cl | $CF_3$ | OMe | OMe | F | Br | H | $CF_3$ | $CF_3$ | Cl | $CF_3$ |
| F | Cl | $NO_2$ | OMe | OMe | Cl | Br | H | $NO_2$ | $CF_3$ | Cl | $NO_2$ |
| F | Cl | OMe | OMe | OMe | Br | Br | H | OMe | $CF_3$ | Cl | OMe |
| Cl | Cl | Me | F | H | Me | Me | OMe | Me | $NO_2$ | Cl | Me |
| Cl | Cl | F | F | H | F | Me | OMe | F | $NO_2$ | Cl | F |
| Cl | Cl | Cl | F | H | Cl | Me | OMe | Cl | $NO_2$ | Cl | Cl |
| Cl | Cl | Br | F | H | Br | Me | OMe | Br | $NO_2$ | Cl | Br |
| Cl | Cl | $CF_3$ | F | H | $CF_3$ | Me | OMe | $CF_3$ | $NO_2$ | Cl | $CF_3$ |

(continued)

| T | U | V | T | U | V | T | U | V | T | U | V |
|---|---|---|---|---|---|---|---|---|---|---|---|
| Cl | Cl | $NO_2$ | F | H | $NO_2$ | Me | OMe | $NO_2$ | $NO_2$ | Cl | $NO_2$ |
| Cl | Cl | OMe | F | H | OMe | Me | OMe | OMe | $NO_2$ | Cl | OMe |
| Me | Br | Me | Cl | H | Me | Br | $NO_2$ | Me | Br | Br | Me |
| Me | Br | F | Cl | H | F | Br | $NO_2$ | F | Br | Br | F |
| Me | Br | Cl | Cl | H | Cl | Br | $NO_2$ | Cl | Br | Br | Cl |
| Me | Br | Br | Cl | H | Br | Br | $NO_2$ | Br | Br | Br | Br |
| Me | Br | $CF_3$ | Cl | H | $CF_3$ | Br | $NO_2$ | $CF_3$ | Br | Br | $CF_3$ |
| Me | Br | $NO_2$ | Cl | H | $NO_2$ | Br | $NO_2$ | $NO_2$ | Br | Br | $NO_2$ |
| Me | Br | OMe | Cl | H | OMe | Br | $NO_2$ | OMe | Br | Br | OMe |
| F | Br | Me | $CF_3$ | H | Me | $CF_3$ | $NO_2$ | Me | $CF_3$ | Br | Me |
| F | Br | F | $CF_3$ | H | F | $CF_3$ | $NO_2$ | F | $CF_3$ | Br | F |
| F | Br | Cl | $CF_3$ | H | Cl | $CF_3$ | $NO_2$ | Cl | $CF_3$ | Br | Cl |
| F | Br | Br | $CF_3$ | H | Br | $CF_3$ | $NO_2$ | Br | $CF_3$ | Br | Br |
| F | Br | $CF_3$ | $CF_3$ | H | $CF_3$ | $CF_3$ | $NO_2$ | $CF_3$ | $CF_3$ | Br | $CF_3$ |
| F | Br | $NO_2$ | $CF_3$ | H | $NO_2$ | $CF_3$ | $NO_2$ | $NO_2$ | $CF_3$ | Br | $NO_2$ |
| F | Br | OMe | $CF_3$ | H | OMe | $CF_3$ | $NO_2$ | OMe | $CF_3$ | Br | OMe |
| Cl | Br | Me | $NO_2$ | H | Me | Cl | $CF_3$ | Me | $NO_2$ | Br | Me |
| Cl | Br | F | $NO_2$ | H | F | Cl | $CF_3$ | F | $NO_2$ | Br | F |
| Cl | Br | Cl | $NO_2$ | H | Cl | Cl | $CF_3$ | Cl | $NO_2$ | Br | Cl |
| Cl | Br | Br | $NO_2$ | H | Br | Cl | $CF_3$ | Br | $NO_2$ | Br | Br |
| Cl | Br | $CF_3$ | $NO_2$ | H | $CF_3$ | Cl | $CF_3$ | $CF_3$ | $NO_2$ | Br | $CF_3$ |
| Cl | Br | $NO_2$ | $NO_2$ | H | $NO_2$ | Cl | $CF_3$ | $NO_2$ | $NO_2$ | Br | $NO_2$ |
| Cl | Br | OMe | $NO_2$ | H | OMe | Cl | $CF_3$ | OMe | $NO_2$ | Br | OMe |
| Me | $CF_3$ | Me | Cl | OMe | Me | $NO_2$ | OMe | Me | Br | $CF_3$ | Me |
| Me | $CF_3$ | F | Cl | OMe | F | $NO_2$ | OMe | F | Br | $CF_3$ | F |
| Me | $CF_3$ | Cl | Cl | OMe | Cl | $NO_2$ | OMe | Cl | Br | $CF_3$ | Cl |
| Me | $CF_3$ | Br | Cl | OMe | Br | $NO_2$ | OMe | Br | Br | $CF_3$ | Br |
| Me | $CF_3$ | $CF_3$ | Cl | OMe | $CF_3$ | $NO_2$ | OMe | $CF_3$ | Br | $CF_3$ | $CF_3$ |
| Me | $CF_3$ | $NO_2$ | Cl | OMe | $NO_2$ | $NO_2$ | OMe | $NO_2$ | Br | $CF_3$ | $NO_2$ |
| Me | $CF_3$ | OMe | Cl | OMe | OMe | $NO_2$ | OMe | OMe | Br | $CF_3$ | OMe |
| F | $CF_3$ | Me | Me | H | Me | $NO_2$ | $CF_3$ | Me | $CF_3$ | $CF_3$ | Me |
| F | $CF_3$ | F | Me | H | F | $NO_2$ | $CF_3$ | F | $CF_3$ | $CF_3$ | F |
| F | $CF_3$ | Cl | Me | H | Cl | $NO_2$ | $CF_3$ | Cl | $CF_3$ | $CF_3$ | Cl |
| F | $CF_3$ | Br | Me | H | Br | $NO_2$ | $CF_3$ | Br | $CF_3$ | $CF_3$ | Br |
| F | $CF_3$ | $CF_3$ | Me | H | $CF_3$ | $NO_2$ | $CF_3$ | $CF_3$ | $CF_3$ | $CF_3$ | $CF_3$ |
| F | $CF_3$ | $NO_2$ | Me | H | $NO_2$ | $NO_2$ | $CF_3$ | $NO_2$ | $CF_3$ | $CF_3$ | $NO_2$ |
| F | $CF_3$ | OMe | Me | H | OMe | $NO_2$ | $CF_3$ | OMe | $CF_3$ | $CF_3$ | OMe |

Table 2

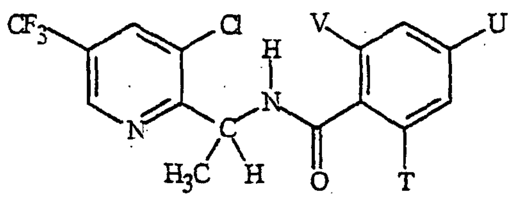

| T | U | V | T | U | V | T | U | V | T | U | V |
|---|---|---|---|---|---|---|---|---|---|---|---|
| Me | Me | Me | OMe | Me | Me | Cl | $NO_2$ | Me | Br | Me | Me |

(continued)

| T | U | V | T | U | V | T | U | V | T | U | V |
|---|---|---|---|---|---|---|---|---|---|---|---|
| Me | Me | F | OMe | Me | F | Cl | $NO_2$ | F | Br | Me | F |
| Me | Me | Cl | OMe | Me | Cl | Cl | $NO_2$ | Cl | Br | Me | Cl |
| Me | Me | Br | OMe | Me | Br | Cl | $NO_2$ | Br | Br | Me | Br |
| Me | Me | $CF_3$ | OMe | Me | $CF_3$ | Cl | $NO_2$ | $CF_3$ | Br | Me | $CF_3$ |
| Me | Me | $NO_2$ | OMe | Me | $NO_2$ | Cl | $NO_2$ | $NO_2$ | Br | Me | $NO_2$ |
| Me | Me | OMe | OMe | Me | OMe | Cl | $NO_2$ | OMe | Br | Me | OMe |
| F | Me | Me | OMe | F | Me | $CF_3$ | OMe | Me | $CF_3$ | Me | Me |
| F | Me | F | OMe | F | F | $CF_3$ | OMe | F | $CF_3$ | Me | F |
| F | Me | Cl | OMe | F | Cl | $CF_3$ | OMe | Cl | $CF_3$ | Me | Cl |
| F | Me | Br | OMe | F | Br | $CF_3$ | OMe | Br | $CF_3$ | Me | Br |
| F | Me | $CF_3$ | OMe | F | $CF_3$ | $CF_3$ | OMe | $CF_3$ | $CF_3$ | Me | $CF_3$ |
| F | Me | $NO_2$ | OMe | F | $NO_2$ | F | OMe | Me | $CF_3$ | Me | $NO_2$ |
| F | Me | OMe | OMe | F | OMe | F | OMe | F | $CF_3$ | Me | OMe |
| Cl | Me | Me | OMe | Cl | Me | F | OMe | Cl | $NO_2$ | Me | Me |
| Cl | Me | F | OMe | Cl | F | F | OMe | Br | $NO_2$ | Me | F |
| Cl | Me | Cl | OMe | Cl | Cl | F | OMe | $CF_3$ | $NO_2$ | Me | Cl |
| Cl | Me | Br | OMe | Cl | Br | F | OMe | $NO_2$ | $NO_2$ | Me | Br |
| Cl | Me | $CF_3$ | OMe | Cl | $CF_3$ | F | OMe | OMe | $NO_2$ | Me | $CF_3$ |
| Cl | Me | $NO_2$ | OMe | Cl | $NO_2$ | $CF_3$ | OMe | $NO_2$ | $NO_2$ | Me | $NO_2$ |
| Cl | Me | OMe | OMe | Cl | OMe | $CF_3$ | OMe | OMe | $NO_2$ | Me | OMe |
| Me | F | Me | OMe | H | Me | Br | OMe | $NO_2$ | Br | F | Me |
| Me | F | F | OMe | H | F | Br | OMe | OMe | Br | F | F |
| Me | F | Cl | OMe | H | Cl | $NO_2$ | $NO_2$ | Me | Br | F | Cl |
| Me | F | Br | OMe | H | OMe | $NO_2$ | $NO_2$ | F | Br | F | Br |
| Me | F | $CF_3$ | OMe | OMe | $CF_3$ | $NO_2$ | $NO_2$ | Cl | Br | F | $CF_3$ |
| Me | F | $NO_2$ | OMe | OMe | $NO_2$ | $NO_2$ | $NO_2$ | Br | Br | F | $NO_2$ |
| Me | F | OMe | OMe | OMe | OMe | $NO_2$ | $NO_2$ | $CF_3$ | Br | F | OMe |
| F | F | Me | OMe | Br | Me | $NO_2$ | $NO_2$ | $NO_2$ | $CF_3$ | F | Me |
| F | F | F | OMe | Br | F | $NO_2$ | $NO_2$ | OMe | $CF_3$ | F | F |
| F | F | Cl | OMe | Br | Cl | Br | OMe | Me | $CF_3$ | F | Cl |
| F | F | Br | OMe | Br | Br | Br | OMe | F | $CF_3$ | F | Br |
| F | F | $CF_3$ | OMe | Br | $CF_3$ | Br | OMe | Cl | $CF_3$ | F | $CF_3$ |
| F | F | $NO_2$ | OMe | Br | $NO_2$ | Br | OMe | Br | $CF_3$ | F | $NO_2$ |
| F | F | OMe | OMe | Br | OMe | Br | OMe | $CF_3$ | $CF_3$ | F | OMe |
| Cl | F | Me | OMe | $CF_3$ | Me | Me | $NO_2$ | Me | $NO_2$ | F | Me |
| Cl | F | F | OMe | $CF_3$ | F | Me | $NO_2$ | F | $NO_2$ | F | F |
| Cl | F | Cl | OMe | $CF_3$ | Cl | Me | $NO_2$ | Cl | $NO_2$ | F | Cl |
| Cl | F | Br | OMe | $CF_3$ | Br | Me | $NO_2$ | Br | $NO_2$ | F | Br |
| Cl | F | $CF_3$ | OMe | $CF_3$ | $CF_3$ | Me | $NO_2$ | $CF_3$ | $NO_2$ | F | $CF_3$ |
| Cl | F | $NO_2$ | OMe | $CF_3$ | $NO_2$ | Me | $NO_2$ | $NO_2$ | $NO_2$ | F | $NO_2$ |
| Cl | F | OMe | OMe | $CF_3$ | OMe | Me | $NO_2$ | OMe | $NO_2$ | F | OMe |
| Me | Cl | Me | OMe | $NO_2$ | Me | F | $NO_2$ | Me | Br | Cl | Me |
| Me | Cl | F | OMe | $NO_2$ | F | F | $NO_2$ | F | Br | Cl | F |
| Me | Cl | Cl | OMe | $NO_2$ | Cl | F | $NO_2$ | Cl | Br | Cl | Cl |
| Me | Cl | Br | OMe | $NO_2$ | Br | F | $NO_2$ | Br | Br | Cl | Br |
| Me | Cl | $CF_3$ | OMe | $NO_2$ | $CF_3$ | F | $NO_2$ | $CF_3$ | Br | Cl | $CF_3$ |
| Me | Cl | $NO_2$ | OMe | NO2 | $NO_2$ | F | $NO_2$ | $NO_2$ | Br | Cl | $NO_2$ |
| Me | Cl | OMe | OMe | $NO_2$ | OMe | F | $NO_2$ | OMe | Br | Cl | OMe |
| F | Cl | Me | OMe | H | Br | Br | H | Me | $CF_3$ | Cl | Me |
| F | Cl | F | OMe | H | $CF_3$ | Br | H | F | $CF_3$ | Cl | F |

(continued)

| T | U | V | T | U | V | T | U | V | T | U | V |
|---|---|---|---|---|---|---|---|---|---|---|---|
| F | Cl | Cl | OMe | H | $NO_2$ | Br | H | Cl | $CF_3$ | Cl | Cl |
| F | Cl | Br | OMe | OMe | Me | Br | H | Br | $CF_3$ | Cl | Br |
| F | Cl | $CF_3$ | OMe | OMe | F | Br | H | $CF_3$ | $CF_3$ | Cl | $CF_3$ |
| F | Cl | $NO_2$ | OMe | OMe | Cl | Br | H | $NO_2$ | $CF_3$ | Cl | $NO_2$ |
| F | Cl | OMe | OMe | OMe | Br | Br | H | OMe | $CF_3$ | Cl | OMe |
| Cl | Cl | Me | F | H | Me | Me | OMe | Me | $NO_2$ | Cl | Me |
| Cl | Cl | F | F | H | F | Me | OMe | F | $NO_2$ | Cl | F |
| Cl | Cl | Cl | F | H | Cl | Me | OMe | Cl | $NO_2$ | Cl | Cl |
| Cl | Cl | Br | F | H | Br | Me | OMe | Br | $NO_2$ | Cl | Br |
| Cl | Cl | $CF_3$ | F | H | $CF_3$ | Me | OMe | $CF_3$ | $NO_2$ | Cl | $CF_3$ |
| Cl | Cl | $NO_2$ | F | H | $NO_2$ | Me | OMe | $NO_2$ | $NO_2$ | Cl | $NO_2$ |
| Cl | Cl | OMe | F | H | OMe | Me | OMe | OMe | $NO_2$ | Cl | OMe |
| Me | Br | Me | Cl | H | Me | Br | $NO_2$ | Me | Br | Br | Me |
| Me | Br | F | Cl | H | F | Br | $NO_2$ | F | Br | Br | F |
| Me | Br | Cl | Cl | H | Cl | Br | $NO_2$ | Cl | Br | Br | Cl |
| Me | Br | Br | Cl | H | Br | Br | $NO_2$ | Br | Br | Br | Br |
| Me | Br | $CF_3$ | Cl | H | $CF_3$ | Br | $NO_2$ | $CF_3$ | Br | Br | $CF_3$ |
| Me | Br | $NO_2$ | Cl | H | $NO_2$ | Br | $NO_2$ | $NO_2$ | Br | Br | $NO_2$ |
| Me | Br | OMe | Cl | H | OMe | Br | $NO_2$ | OMe | Br | Br | OMe |
| F | Br | Me | $CF_3$ | H | Me | $CF_3$ | $NO_2$ | Me | $CF_3$ | Br | Me |
| F | Br | F | $CF_3$ | H | F | $CF_3$ | $NO_2$ | F | $CF_3$ | Br | F |
| F | Br | Cl | $CF_3$ | H | Cl | $CF_3$ | $NO_2$ | Cl | $CF_3$ | Br | Cl |
| F | Br | Br | $CF_3$ | H | Br | $CF_3$ | $NO_2$ | Br | $CF_3$ | Br | Br |
| F | Br | $CF_3$ | $CF_3$ | H | $CF_3$ | $CF_3$ | $NO_2$ | $CF_3$ | $CF_3$ | Br | $CF_3$ |
| F | Br | $NO_2$ | $CF_3$ | H | $NO_2$ | $CF_3$ | $NO_2$ | $NO_2$ | $CF_3$ | Br | $NO_2$ |
| F | Br | OMe | $CF_3$ | H | OMe | $CF_3$ | $NO_2$ | OMe | $CF_3$ | Br | OMe |
| Cl | Br | Me | $NO_2$ | H | Me | Cl | $CF_3$ | Me | $NO_2$ | Br | Me |
| Cl | Br | F | $NO_2$ | H | F | Cl | $CF_3$ | F | $NO_2$ | Br | F |
| Cl | Br | Cl | $NO_2$ | H | Cl | Cl | $CF_3$ | Cl | $NO_2$ | Br | Cl |
| Cl | Br | Br | $NO_2$ | H | Br | Cl | $CF_3$ | Br | $NO_2$ | Br | Br |
| Cl | Br | $CF_3$ | $NO_2$ | H | $CF_3$ | Cl | $CF_3$ | $CF_3$ | $NO_2$ | Br | $CF_3$ |
| Cl | Br | $NO_2$ | $NO_2$ | H | $NO_2$ | Cl | $CF_3$ | $NO_2$ | $NO_2$ | Br | $NO_2$ |
| Cl | Br | OMe | $NO_2$ | H | OMe | Cl | $CF_3$ | OMe | $NO_2$ | Br | OMe |
| Me | $CF_3$ | Me | Cl | OMe | Me | $NO_2$ | OMe | Me | Br | $CF_3$ | Me |
| Me | $CF_3$ | F | Cl | OMe | F | $NO_2$ | OMe | F | Br | $CF_3$ | F |
| Me | $CF_3$ | Cl | Cl | OMe | Cl | $NO_2$ | OMe | Cl | Br | $CF_3$ | Cl |
| Me | $CF_3$ | Br | Cl | OMe | Br | $NO_2$ | OMe | Br | Br | $CF_3$ | Br |
| Me | $CF_3$ | $CF_3$ | Cl | OMe | $CF_3$ | $NO_2$ | OMe | $CF_3$ | Br | $CF_3$ | $CF_3$ |
| Me | $CF_3$ | $NO_2$ | Cl | OMe | $NO_2$ | $NO_2$ | OMe | $NO_2$ | Br | $CF_3$ | $NO_2$ |
| Me | $CF_3$ | OMe | Cl | OMe | OMe | $NO_2$ | OMe | OMe | Br | $CF_3$ | OMe |
| F | $CF_3$ | Me | Me | H | Me | $NO_2$ | $CF_3$ | Me | $CF_3$ | $CF_3$ | Me |
| F | $CF_3$ | F | Me | H | F | $NO_2$ | $CF_3$ | F | $CF_3$ | $CF_3$ | F |
| F | $CF_3$ | Cl | Me | H | Cl | $NO_2$ | $CF_3$ | Cl | $CF_3$ | $CF_3$ | Cl |
| F | $CF_3$ | Br | Me | H | Br | $NO_2$ | $CF_3$ | Br | $CF_3$ | $CF_3$ | Br |
| F | $CF_3$ | $CF_3$ | Me | H | $CF_3$ | $NO_2$ | $CF_3$ | $CF_3$ | $CF_3$ | $CF_3$ | $CF_3$ |
| F | $CF_3$ | $NO_2$ | Me | H | $NO_2$ | $NO_2$ | $CF_3$ | $NO_2$ | $CF_3$ | $CF_3$ | $NO_2$ |
| F | $CF_3$ | OMe | Me | H | OMe | $NO_2$ | $CF_3$ | OMe | $CF_3$ | $CF_3$ | OMe |

Table 3

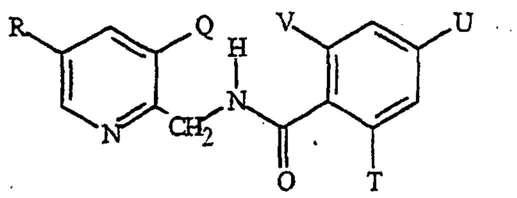

T and V are both Cl and U is H

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | OCF2 | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCBF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T and V are both Cl and U is $CH_3$

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl and V and U are both Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |

(continued)

| Q | R | Q | R | Q | R | Q | R |
|---|---|---|---|---|---|---|---|
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl, V is I and U is H

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl, V is I and U is Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is F, V is I and U is H

(continued)

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $CF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$. |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is F, V is I and U is Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

Table 4

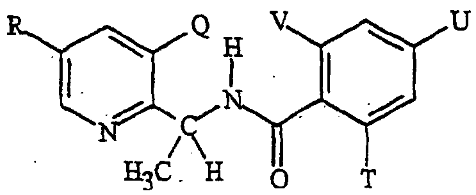

T and V are both Cl and U is H

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |

(continued)

| Q | R | Q | R | Q | R | Q | R |
|---|---|---|---|---|---|---|---|
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCBF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I Br | | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T and V are both Cl and U is $CH_3$

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CEFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl and V and U are both Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCBF_2$ | Cl | $SOCF_2CF_3$ | Br | $SOCEF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |

(continued)

T is Cl and V and U are both Me

| Q | R | Q | R | Q | R | Q | R |
|---|---|---|---|---|---|---|---|
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl, V is I and U is H

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCBFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is Cl, V is I and U is Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is F, V is I and U is H.

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |

(continued)

T is F, V is I and U is H.

| Q | R | Q | R | Q | R | Q | R |
|---|---|---|---|---|---|---|---|
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCEF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CBF_2$ | Br | $SOCHFCF_3$ |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

T is F, V is I and U is Me

| Q | R | Q | R | Q | R | Q | R |
|---|---|---|---|---|---|---|---|
| Cl | Cl | Cl | $OCH_2CF_3$ | Br | Cl | Br | $OCH_2CF_3$ |
| Cl | Br | Cl | $OCF_2CF_2H$ | Br | Br | Br | $OCF_2CF_2H$ |
| Cl | $OCF_3$ | Cl | $OCHFCF_3$ | Br | $OCF_3$ | Br | $OCHFCF_3$ |
| Cl | $OCHF_2$ | Cl | $SCH_2CF_3$ | Br | $OCHF_2$ | Br | $SCH_2CF_3$ |
| Cl | $SCF_3$ | Cl | $SCF_2CF_3$ | Br | $SCF_3$ | Br | $SCF_2CF_3$ |
| Cl | $SCHF_2$ | Cl | $SCF_2CF_2H$ | Br | $SCHF_2$ | Br | $SCF_2CF_2H$ |
| Cl | $SOCF_3$ | Cl | $SOCH_2CF_3$ | Br | $SOCF_3$ | Br | $SOCH_2CF_3$ |
| Cl | $SOCHF_2$ | Cl | $SOCF_2CF_3$ | Br | $SOCHF_2$ | Br | $SOCF_2CF_3$ |
| Cl | $SO_2CF_3$ | Cl | $SOCF_2CF_2H$ | Br | $SO_2CF_3$ | Br | $SOCF_2CF_2H$ |
| Cl | $SO_2CHF_2$ | Cl | $SOCHFCF_3$ | Br | $SO_2CHF_2$ | Br | SOCHFCF3 |
| Cl | CN | Cl | $SO_2CH_2CF_3$ | Br | CN | Br | $SO_2CH_2CF_3$ |
| Cl | I | Cl | $SO_2CF_2CF_3$ | Br | I | Br | $SO_2CF_2CF_3$ |
| Cl | $OCH_2F$ | Cl | $SO_2CF_2CF_2H$ | Br | $OCH_2F$ | Br | $SO_2CF_2CF_2H$ |
| Cl | $SCH_2F$ | Cl | $SO_2CHFCF_3$ | Br | $SCH_2F$ | Br | $SO_2CHFCF_3$ |
| Cl | Et | Cl | $OCF_2CF_3$ | Br | Et | Br | $OCF_2CF_3$ |
| Cl | $OCF_2Cl$ | Cl | $SCHFCF_3$ | Br | $OCF_2Cl$ | Br | $SCHFCF_3$ |

Table 5

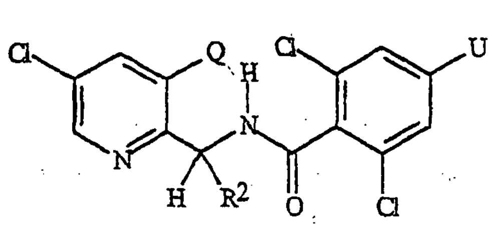

| Q | $R^2$ | U | R | $R^2$ | U | R | $R^2$ | U |
|---|---|---|---|---|---|---|---|---|
| I | H | H | I | Me | H | I | Me | Me |
| $OCHF_2$ | H | H | $OCHF_2$ | Me | H | $OCHF_2$ | Me | Me |

(continued)

| Q | $R^2$ | U | R | $R^2$ | U | R | $R^2$ | U |
|---|---|---|---|---|---|---|---|---|
| $OCH_2F$ | H | H | $OCH_2F$ | Me | H | $OCH_2F$ | Me | Me |
| $OCF_2Cl$ | H | H | $OCF_2Cl$ | Me | H | $OCF_2Cl$ | Me | Me |
| $OCH_2CF_3$ | H | H | $OCH_2CF_3$ | Me | H | $OCH_2CF_3$ | Me | Me |
| Et | H | H | Et | Me | H | Et | Me | Me |
| CN | H | H | CN | Me | H | CN | Me | Me |
| $NH_2$ | H | H | $NH_2$ | Me | H | $NH_2$ | Me | Me |
| NHCOMe | H | H | NHCOMe | Me | H | NHCOMe | Me | Me |
| $NHCOCF_3$ | H | H | $NHCOCF_3$ | Me | H | $NHCOCF_3$ | Me | Me |
| $SCF_3$ | H | H | $SCF_3$ | Me | H | $SCF_3$ | Me | Me |
| $SCHF_2$ | H | H | $SCHF_2$ | Me | H | $SCHF_2$ | Me | Me |
| $SCH_2F$ | H | H | $SCH_2F$ | Me | H | $SCH_2F$ | Me | Me |
| Ph | H | H | Ph | Me | H | Ph | Me | Me |
| $Me_3Si$ | H | H | $Me_3Si$ | Me | H | $Me_3Si$ | Me | Me |
| I | H | Me | Et | H | Me | $SCF_3$ | H | Me |
| $OCHF_2$ | H | Me | CN | H | Me | $SCHF_2$ | H | Me |
| $OCH_2F$ | H | Me | $NH_2$ | H | Me | $SCH_2F$ | H | Me |
| $OCF_2Cl$ | H | Me | NHCOMe | H | Me | Ph | H | Me |
| $OCH_2CF_3$ | H | Me | $NHCOCF_3$ | H | Me | $Me_3$ Si | H | Me |

Table 6

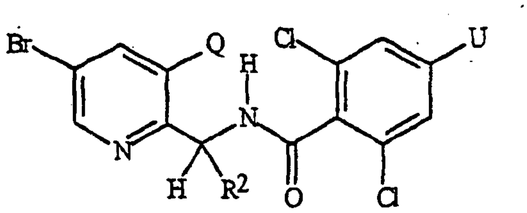

| Q | $R^2$ | U | R | $R^2$ | U | R | $R^2$ | U |
|---|---|---|---|---|---|---|---|---|
| I | H | H | I | Me | H | I | Me | Me |
| $OCHF_2$ | H | H | $OCHF_2$ | Me | H | $OCHF_2$ | Me | Me |
| $OCH_2F$ | H | H | $OCH_2F$ | Me | H | $OCH_2F$ | Me | Me |
| $OCF_2Cl$ | H | H | $OCF_2Cl$ | Me | H | $OCF_2Cl$ | Me | Me |
| $OCH_2CF_3$ | H | H | $OCH_2CF_3$ | Me | H | $OCH_2$CF3 | Me | Me |
| Et | H | H | Et | Me | H | Et | Me | Me |
| CN | H | H | CN | Me | H | CN | Me | Me |
| $NH_2$ | H | H | $NH_2$ | Me | H | $NH_2$ | Me | Me |
| NHCOMe | H | H | NHCOMe | Me | H | NHCOMe | Me | Me |
| $NHCOCF_3$ | H | H | $NHCOCF_3$ | Me | H | $NHCOCF_3$ | Me | Me |
| $SCF_3$ | H | H | $SCF_3$ | Me | H | $SCF_3$ | Me | Me |
| $SCHF_2$ | H | H | $SCHF_2$ | Me | H | $SCHF_2$ | Me | Me |
| $SCH_2F$ | H | H | $SCH_2F$ | Me | H | $SCH_2F$ | Me | Me |
| Ph | H | H | Ph | Me | H | Ph | Me | Me |
| $Me_3$ Si | H | H | $Me_3$ Si | Me | H | $Me_3$ Si | Me | Me |
| I | H | Me | Et | H | Me | $SCF_3$ | H | Me |
| $OCHF_2$ | H | Me | CN | H | Me | $SCHF_2$ | H | Me |
| $OCH_2F$ | H | Me | $NH_2$ | H | Me | $SCH_2F$ | H | Me |
| $OCF_2Cl$ | H | Me | NHCOMe | H | Me | Ph | H | Me |

(continued)

| Q | $R^2$ | U | R | $R^2$ | U | R | $R^2$ | U |
|---|---|---|---|---|---|---|---|---|
| $OCH_2CF_3$ | H | Me | $NHCOCF_3$ | H | Me | $Me_3Si$ | H | Me |

Table 7

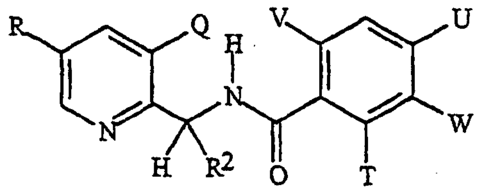

| R | Q | $R^2$ | T | W | V | U | R | Q | $R^2$ | T | W | V | U |
|---|---|---|---|---|---|---|---|---|---|---|---|---|---|
| Cl | Cl | I H | Cl | H | H | H | Br | Cl | H | Cl | H | H | H |
| Cl | Cl | H | $NO_2$ | H | H | H | Br | Cl | H | $NO_2$ | H | H | H |
| Cl | Cl | H | F | H | H | H | Br | Cl | H | F | H | H | H |
| Cl | Cl | H | F | F | F | H | Br | Cl | H | F | F | F | H |
| Cl | Cl | H | F | H | F | H | Br | Cl | H | F | H | F | H |
| Cl | Cl | H | F | H | Cl | H | Br | Cl | H | F | H | Cl | H |
| Cl | Cl | H | F | H | Br | H | Br | Cl | H | F | H | Br | H |
| Cl | Cl | H | F | H | OMe | H | Br | Cl | H | F | H | OMe | H |
| Cl | Cl | H | F | H | $CF_3$ | H | Br | Cl | H | F | H | $CF_3$ | H |
| Cl | Cl | H | Cl | H | F | H | Br | Cl | H | Cl | H | F | H |
| Cl | Cl | H | Cl | H | Br | H | Br | Cl | H | Cl | H | Br | H |
| Cl | Cl | H | Cl | H | OMe | H | Br | Cl | H | Cl | H | OMe | H |
| Cl | Cl | H | Cl | H | $CF_3$ | H | Br | Cl | H | Cl | H | $CF_3$ | H |
| Cl | Cl | H | Br | H | F | H | Br | Cl | H | Br | H | F | H |
| Cl | Cl | H | Br | H | Cl | H | Br | Cl | H | Br | H | Cl | H |
| Cl | Cl | H | Br | H | Br | H | Br | Cl | H | Br | H | Br | H |
| Cl | Cl | H | Br | H | I | H | Br | Cl | H | Br | H | I | H |
| Cl | Cl | H | Br | H | OMe | H | Br | Cl | H | Br | H | OMe | H |
| Cl | Cl | H | Br | H | $CF_3$ | H | Br | Cl | H | Br | H | $CF_3$ | H |
| Cl | Cl | H | I | H | F | H | Br | Cl | H | I | H | F | H |
| Cl | Cl | H | I | H | Cl | H | Br | Cl | H | I | H | Cl | H |
| Cl | Cl | H | I | H | Br | H | Br | Cl | H | I | H | Br | H |
| Cl | Cl | H | I | H | I | H | Br | Cl | H | I | H | I | H |
| Cl | Cl | H | I | H | OMe | H | Br | Cl | H | I | H | OMe | H |
| Cl | Cl | H | I | H | $CF_3$ | H | Br | Cl | H | I | H | $CF_3$ | H |
| Cl | Cl | H | OMe | H | F | H | Br | Cl | H | OMe | H | F | H |
| Cl | Cl | H | OMe | H | Cl | H | Br | Cl | H | OMe | H | Cl | H |
| Cl | Cl | H | OMe | H | Br | H | Br | Cl | H | OMe | H | Br | H |
| Cl | Cl | H | OMe | H | I | H | Br | Cl | H | OMe | H | I | H |
| Cl | Cl | H | OMe | H | OMe | H | Br | Cl | H | OMe | H | OMe | H |
| Cl | Cl | H | OMe | H | $CF_3$ | H | Br | Cl | H | OMe | H | $CF_3$ | H |
| Cl | Cl | H | $CF_3$ | H | F | H | Br | Cl | H | $CF_3$ | H | F | H |
| Cl | Cl | H | $CF_3$ | H | Cl | H | Br | Cl | H | $CF_3$ | H | Cl | H |
| Cl | Cl | H | $CF_3$ | H | Br | H | Br | Cl | H | $CF_3$ | H | Br | H |
| Cl | Cl | H | $CF_3$ | H | I | H | Br | Cl | H | $CF_3$ | H | I | H |
| Cl | Cl | H | $CF_3$ | H | OMe | H | Br | Cl | H | $CF_3$ | H | OMe | H |

(continued)

| R | Q | $R^2$ | T | W | V | U | R | Q | $R^2$ | T | W | V | U |
|---|---|---|---|---|---|---|---|---|---|---|---|---|---|
| Cl | Cl | H | $CF_3$ | H | $CF_3$ | H | Br | Cl | H | $CF_3$ | H | $CF_3$ | H |
| Cl | Cl | H | Cl | H | H | Me | Br | Cl | H | Cl | H | H | Me |
| Cl | Cl | H | $NO_2$ | H | H | Me | Br | Cl | H | $NO_2$ | H | H | Me |
| Cl | Cl | H | F | H | H | Me | Br | Cl | H | F | H | H | Me |
| Cl | Cl | H | F | F | F | Me | Br | Cl | H | F | F | F | Me |
| Cl | Cl | H | F | H | F | Me | Br | Cl | H | F | H | F | Me |
| Cl | Cl | H | F | H | Cl | Me | Br | Cl | H | F | H | Cl | Me |
| Cl | Cl | H | F | H | Br | Me | Br | Cl | H | F | H | Br | Me |
| Cl | Cl | H | F | H | OMe | Me | Br | Cl | H | F | H | OMe | Me |
| Cl | Cl | H | F | H | $CF_3$ | Me | Br | Cl | H | F | H | $CF_3$ | Me |
| Cl | Cl | H | Cl | H | F | Me | Br | Cl | H | Cl | H | F | Me |
| Cl | Cl | H | Cl | H | Br | Me | Br | Cl | H | Cl | H | Br | Me |
| Cl | Cl | H | Cl | H | OMe | Me | Br | Cl | H | Cl | H | OMe | Me |
| Cl | Cl | H | Cl | H | $CF_3$ | Me | Br | Cl | H | Cl | H | $CF_3$ | Me |
| Cl | Cl | H | Br | H | F | Me | Br | Cl | H | Br | H | F | Me |
| Cl | Cl | H | Br | H | Cl | Me | Br | Cl | H | Br | H | Cl | Me |
| Cl | Cl | H | Br | H | Br | Me | Br | Cl | H | Br | H | Br | Me |
| Cl | Cl | H | Br | H | I | Me | Br | Cl | H | Br | H | I | Me |
| Cl | Cl | H | Br | H | OMe | Me | Br | Cl | H | Br | H | OMe | Me |
| Cl | Cl | H | Br | H | $CF_3$ | Me | Br | Cl | H | Br | H | $CF_3$ | Me |
| Cl | Cl | H | I | H | F | Me | Br | Cl | H | I | H | F | Me |
| Cl | Cl | H | I | H | Cl | Me | Br | Cl | H | I | H | Cl | Me |
| Cl | Cl | H | I | H | Br | Me | Br | Cl | H | I | H | Br | Me |
| Cl | Cl | H | I | H | I | Me | Br | Cl | H | I | H | I | Me |
| Cl | Cl | H | I | H | OMe | Me | Br | Cl | H | I | H | OMe | Me |
| Cl | Cl | H | I | H | $CF_3$ | Me | Br | Cl | H | I | H | $CF_3$ | Me |
| Cl | Cl | H | OMe | H | F | Me | Br | Cl | H | OMe | H | F | Me |
| Cl | Cl | H | OMe | H | Cl | Me | Br | Cl | H | OMe | H | Cl | Me |
| Cl | Cl | H | OMe | H | Br | Me | Br | Cl | H | OMe | H | Br | Me |
| Cl | Cl | H | OMe | H | I | Me | Br | Cl | H | OMe | H | I | Me |
| Cl | Cl | H | OMe | H | OMe | Me | Br | Cl | H | OMe | H | OMe | Me |
| Cl | Cl | H | OMe | H | $CF_3$ | Me | Br | Cl | H | OMe | H | $CF_3$ | Me |
| Cl | Cl | H | $CF_3$ | H | F | Me | Br | Cl | H | $CF_3$ | H | F | Me |
| Cl | Cl | H | $CF_3$ | H | Cl | Me | Br | Cl | H | $CF_3$ | H | Cl | Me |
| Cl | Cl | H | $CF_3$ | H | Br | Me | Br | Cl | H | $CF_3$ | H | Br | Me |
| Cl | Cl | H | $CF_3$ | H | I | Me | Br | Cl | H | $CF_3$ | H | I | Me |
| Cl | Cl | H | $CF_3$ | H | OMe | Me | Br | Cl | H | $CF_3$ | H | OMe | Me |
| Cl | Cl | H | $CF_3$ | H | $CF_3$ | Me | Br | Cl | H | $CF_3$ | H | $CF_3$ | Me |
| Cl | Cl | Me | Cl | H | H | H | Br | Cl | Me | Cl | H | H | H |
| Cl | Cl | Me | $NO_2$ | H | H | H | Br | Cl | Me | $NO_2$ | H | H | H |
| Cl | Cl | Me | F | H | H | H | Br | Cl | Me | F | H | H | H |
| Cl | Cl | Me | F | F | F | H | Br | Cl | Me | F | F | F | H |
| Cl | Cl | Me | F | H | F | H | Br | Cl | Me | F | H | F | H |
| Cl | Cl | Me | F | H | Cl | H | Br | Cl | Me | F | H | Cl | H |
| Cl | Cl | Me | F | H | Br | H | Br | Cl | Me | F | H | Br | H |
| Cl | Cl | Me | F | H | OMe | H | Br | Cl | Me | F | H | OMe | H |
| Cl | Cl | Me | F | H | $CF_3$ | H | Br | Cl | Me | F | H | $CF_3$ | H |
| Cl | Cl | Me | Cl | H | F | H | Br | Cl | Me | Cl | H | F | H |
| Cl | Cl | Me | Cl | H | Br | H | Br | Cl | Me | Cl | H | Br | H |
| Cl | Cl | Me | Cl | H | OMe | H | Br | Cl | Me | Cl | H | OMe | H |

(continued)

| R | Q | $R^2$ | T | W | V | U | R | Q | $R^2$ | T | W | V | U |
|---|---|---|---|---|---|---|---|---|---|---|---|---|---|
| Cl | Cl | Me | Cl | H | $CF_3$ | H | Br | Cl | Me | Cl | H | $CF_3$ | H |
| Cl | Cl | Me | Br | H | F | H | Br | Cl | Me | Br | H | F | H |
| Cl | Cl | Me | Br | H | Cl | H | Br | Cl | Me | Br | H | Cl | H |
| Cl | Cl | Me | Br | H | Br | H | Br | Cl | Me | Br | H | Br | H |
| Cl | Cl | Me | Br | H | I | H | Br | Cl | Me | Br | H | I | H |
| Cl | Cl | Me | Br | H | OMe | H | Br | Cl | Me | Br | H | OMe | H |
| Cl | Cl | Me | Br | H | $CF_3$ | H | Br | Cl | Me | Br | H | $CF_3$ | H |
| Cl | Cl | Me | I | H | F | H | Br | Cl | Me | I | H | F | H |
| Cl | Cl | Me | I | H | Cl | H | Br | Cl | Me | I | H | Cl | H |
| Cl | Cl | Me | I | H | Br | H | Br | Cl | Me | I | H | Br | H |
| Cl | Cl | Me | I | H | I | H | Br | Cl | Me | I | H | I | H |
| Cl | Cl | Me | I | H | OMe | H | Br | Cl | Me | I | H | OMe | H |
| Cl | Cl | Me | I | H | $CF_3$ | H | Br | Cl | Me | I | H | $CF_3$ | H |
| Cl | Cl | Me | OMe | H | F | H | Br | Cl | Me | OMe | H | F | H |
| Cl | Cl | Me | OMe | H | Cl | H | Br | Cl | Me | OMe | H | Cl | H |
| Cl | Cl | Me | OMe | H | Br | H | Br | Cl | Me | OMe | H | Br | H |
| Cl | Cl | Me | OMe | H | I | H | Br | Cl | Me | OMe | H | I | H |
| Cl | Cl | Me | OMe | H | OMe | H | Br | Cl | Me | OMe | H | OMe | H |
| Cl | Cl | Me | OMe | H | $CF_3$ | H | Br | Cl | Me | OMe | H | $CF_3$ | H |
| Cl | Cl | Me | $CF_3$ | H | F | H | Br | Cl | Me | $CF_3$ | H | F | H |
| Cl | Cl | Me | $CF_3$ | H | Cl | H | Br | Cl | Me | $CF_3$ | H | Cl | H |
| Cl | Cl | Me | $CF_3$ | H | Br | H | Br | Cl | Me | $CF_3$ | H | Br | H |
| Cl | Cl | Me | $CF_3$ | H | I | H | Br | Cl | Me | $CF_3$ | H | I | H |
| Cl | Cl | Me | $CF_3$ | H | OMe | H | Br | Cl | Me | $CF_3$ | H | OMe | H |
| Cl | Cl | Me | $CF_3$ | H | $CF_3$ | H | Br | Cl | Me | $CF_3$ | H | $CF_3$ | H |
| Cl | Cl | Me | Cl | H | H | Me | Br | Cl | Me | Cl | H | H | Me |
| Cl | Cl | Me | $NO_2$ | H | H | Me | Br | Cl | Me | $NO_2$ | H | H | Me |
| Cl | Cl | Me | F | H | H | Me | Br | Cl | Me | F | H | H | Me |
| Cl | Cl | Me | F | F | F | Me | Br | Cl | Me | F | F | F | Me |
| Cl | Cl | Me | F | H | F | Me | Br | Cl | Me | F | H | F | Me |
| Cl | Cl | Me | F | H | Cl | Me | Br | Cl | Me | F | H | Cl | Me |
| Cl | Cl | Me | F | H | Br | Me | Br | Cl | Me | F | H | Br | Me |
| Cl | Cl | Me | F | H | OMe | Me | Br | Cl | Me | F | H | OMe | Me |
| Cl | Cl | Me | F | H | CF3 | Me | Br | Cl | Me | F | H | $CF_3$ | Me |
| Cl | Cl | Me | Cl | H | F | Me | Br | Cl | Me | Cl | H | F | Me |
| Cl | Cl | Me | Cl | H | Br | Me | Br | Cl | Me | Cl | H | Br | Me |
| Cl | Cl | Me | Cl | H | OMe | Me | Br | Cl | Me | Cl | H | OMe | Me |
| Cl | Cl | Me | Cl | H | $CF_3$ | Me | Br | Cl | Me | Cl | H | $CF_3$ | Me |
| Cl | Cl | Me | Br | H | F | Me | Br | Cl | Me | Br | H | F | Me |
| Cl | Cl | Me | Br | H | Cl | Me | Br | Cl | Me | Br | H | Cl | Me |
| Cl | Cl | Me | Br | H | Br | Me | Br | Cl | Me | Br | H | Br | Me |
| Cl | Cl | Me | Br | H | I | Me | Br | Cl | Me | Br | H | I | Me |
| Cl | Cl | Me | Br | H | OMe | Me | Br | Cl | Me | Br | H | OMe | Me |
| Cl | Cl | Me | Br | H | $CF_3$ | Me | Br | Cl | Me | Br | H | $CF_3$ | Me |
| Cl | Cl | Me | I | H | F | Me | Br | Cl | Me | I | H | F | Me |
| Cl | Cl | Me | I | H | Cl | Me | Br | Cl | Me | I | H | Cl | Me |
| Cl | Cl | Me | I | H | Br | Me | Br | Cl | Me | I | H | Br | Me |
| Cl | Cl | Me | I | H | I | Me | Br | Cl | Me | I | H | I | Me |
| Cl | Cl | Me | I | H | OMe | Me | Br | Cl | Me | I | H | OMe | Me |
| Cl | Cl | Me | I | H | $CF_3$ | Me | Br | Cl | Me | I | H | $CF_3$ | Me |

(continued)

| R | Q | $R^2$ | T | W | V | U | R | Q | $R^2$ | T | W | V | U |
|---|---|---|---|---|---|---|---|---|---|---|---|---|---|
| Cl | Cl | Me | OMe | H | F | Me | Br | Cl | Me | OMe | H | F | Me |
| Cl | Cl | Me | OMe | H | Cl | Me | Br | Cl | Me | OMe | H | Cl | Me |
| Cl | Cl | Me | OMe | H | Br | Me | Br | Cl | Me | OMe | H | Br | Me |
| Cl | Cl | Me | OMe | H | I | Me | Br | Cl | Me | OMe | H | I | Me |
| Cl | Cl | Me | OMe | H | OMe | Me | Br | Cl | Me | OMe | H | OMe | Me |
| Cl | Cl | Me | OMe | H | $CF_3$ | Me | Br | Cl | Me | OMe | H | $CF_3$ | Me |
| Cl | Cl | Me | $CF_3$ | H | F | Me | Br | Cl | Me | $CF_3$ | H | F | Me |
| Cl | Cl | Me | $CF_3$ | H | Cl | Me | Br | Cl | Me | $CF_3$ | H | Cl | Me |
| Cl | Cl | Me | $CF_3$ | H | Br | Me | Br | Cl | Me | $CF_3$ | H | Br | Me |
| Cl | Cl | Me | $CF_3$ | H | I | Me | Br | Cl | Me | $CF_3$ | H | I | Me |
| Cl | Cl | Me | $CF_3$ | H | OMe | Me | Br | Cl | Me | $CF_3$ | H | OMe | Me |
| Cl | Cl | Me | $CF_3$ | H | $CF_3$ | Me | Br | Cl | Me | $CF_3$ | H | $CF_3$ | Me |
| Cl | Br | H | Cl | H | H | H | Br | Br | H | Cl | H | H | H |
| Cl | Br | H | $NO_2$ | H | H | H | Br | Br | H | $NO_2$ | H | H | H |
| Cl | Br | H | F | H | H | H | Br | Br | H | F | H | H | H |
| Cl | Br | H | F | F | F | H | Br | Br | H | F | F | F | H |
| Cl | Br | H | F | H | F | H | Br | Br | H | F | H | F | H |
| Cl | Br | H | F | H | Cl | H | Br | Br | H | F | H | Cl | H |
| Cl | Br | H | F | H | Br | H | Br | Br | H | F | H | Br | H |
| Cl | Br | H | F | H | OMe | H | Br | Br | H | F | E | OMe | H |
| Cl | Br | H | F | H | $CF_3$ | H | Br | Br | H | F | H | $CF_3$ | H |
| Cl | Br | H | Cl | H | F | H | Br | Br | H | Cl | H | F | H |
| Cl | Br | H | Cl | H | Br | H | Br | Br | H | Cl | H | Br | H |
| Cl | Br | H | Cl | H | OMe | H | Br | Br | H | Cl | H | OMe | H |
| Cl | Br | H | Cl | H | $CF_3$ | H | Br | Br | H | Cl | H | $CF_3$ | H |
| Cl | Br | H | Br | H | F | H | Br | Br | H | Br | H | F | H |
| Cl | Br | H | Br | H | Cl | H | Br | Br | H | Br | H | Cl | H |
| Cl | Br | H | Br | H | Br | H | Br | Br | H | Br | H | Br | H |
| Cl | Br | H | Br | H | I | H | Br | Br | H | Br | H | I | H |
| Cl | Br | H | Br | H | OMe | H | Br | Br | H | Br | H | OMe | H |
| Cl | Br | H | Br | H | $CF_3$ | H | Br | Br | H | Br | H | $CF_3$ | H |
| Cl | Br | H | I | H | F | H | Br | Br | H | I | H | F | H |
| Cl | Br | H | I | H | Cl | H | Br | Br | H | I | H | Cl | H |
| Cl | Br | H | I | H | Br | H | Br | Br | H | I | H | Br | H |
| Cl | Br | H | I | H | I | H | Br | Br | H | I | H | I | H |
| Cl | Br | H | I | H | OMe | H | Br | Br | H | I | H | OMe | H |
| Cl | Br | H | I | H | $CF_3$ | H | Br | Br | H | I | H | $CF_3$ | H |
| Cl | Br | H | OMe | H | F | H | Br | Br | H | OMe | H | F | H |
| Cl | Br | H | OMe | H | Cl | H | Br | Br | H | OMe | H | Cl | H |
| Cl | Br | H | OMe | H | Br | H | Br | Br | H | OMe | H | Br | H |
| Cl | Br | H | OMe | H | I | H | Br | Br | H | OMe | H | I | H |
| Cl | Br | H | OMe | H | OMe | H | Br | Br | H | OMe | H | OMe | H |
| Cl | Br | H | OMe | H | $CF_3$ | H | Br | Br | H | OMe | H | $CF_3$ | H |
| Cl | Br | H | $CF_3$ | H | F | H | Br | Br | H | $CF_3$ | H | F | H |
| Cl | Br | H | $CF_3$ | H | Cl | H | Br | Br | H | $CF_3$ | H | Cl | H |
| Cl | Br | H | $CF_3$ | H | Br | H | Br | Br | H | $CF_3$ | H | Br | H |
| Cl | Br | H | $CF_3$ | H | I | H | Br | Br | H | $CF_3$ | H | I | H |
| Cl | Br | H | $CF_3$ | H | OMe | H | Br | Br | H | $CF_3$ | H | OMe | H |
| Cl | Br | H | $CF_3$ | H | $CF_3$ | H | Br | Br | H | $CF_3$ | H | $CF_3$ | H |
| Cl | Br | H | Cl | H | H | Me | Br | Br | H | Cl | H | H | Me |

(continued)

| R | Q | $R^2$ | T | W | V | U | R | Q | $R^2$ | T | W | V | U |
|---|---|---|---|---|---|---|---|---|---|---|---|---|---|
| Cl | Br | H | $NO_2$ | H | H | Me | Br | Br | H | $NO_2$ | H | H | Me |
| Cl | Br | H | F | H | H | Me | Br | Br | H | F | H | H | Me |
| Cl | Br | H | F | F | F | Me | Br | Br | H | F | F | F | Me |
| Cl | Br | H | F | H | F | Me | Br | Br | H | F | H | F | Me |
| Cl | Br | H | F | H | Cl | Me | Br | Br | H | F | H | Cl | Me |
| Cl | Br | H | F | H | Br | Me | Br | Br | H | F | H | Br | Me |
| Cl | Br | H | F | H | OMe | Me | Br | Br | H | F | H | OMe | Me |
| Cl | Br | H | F | H | $CF_3$ | Me | Br | Br | H | F | H | $CF_3$ | Me |
| Cl | Br | H | Cl | H | F | Me | Br | Br | H | Cl | H | F | Me |
| Cl | Br | H | Cl | H | Br | Me | Br | Br | H | Cl | H | Br | Me |
| Cl | Br | H | Cl | H | OMe | Me | Br | Br | H | Cl | H | OMe | Me |
| Cl | Br | H | Cl | H | $CF_3$ | Me | Br | Br | H | Cl | H | $CF_3$ | Me |
| Cl | Br | H | Br | H | F | Me | Br | Br | H | Br | H | F | Me |
| Cl | Br | H | Br | H | Cl | Me | Br | Br | H | Br | H | Cl | Me |
| Cl | Br | H | Br | H | Br | Me | Br | Br | H | Br | H | Br | Me |
| Cl | Br | H | Br | H | I | Me | Br | Br | H | Br | H | I | Me |
| Cl | Br | H | Br | H | OMe | Me | Br | Br | H | Br | H | OMe | Me |
| Cl | Br | H | Br | H | $CF_3$ | Me | Br | Br | H | Br | H | $CF_3$ | Me |
| Cl | Br | H | I | H | F | Me | Br | Br | H | I | H | F | Me |
| Cl | Br | H | I | H | Cl | Me | Br | Br | H | I | H | Cl | Me |
| Cl | Br | H | I | H | Br | Me | Br | Br | H | I | H | Br | Me |
| Cl | Br | H | I | H | I | Me | Br | Br | H | I | H | I | Me |
| Cl | Br | H | I | H | OMe | Me | Br | Br | H | I | H | OMe | Me |
| Cl | Br | H | I | H | $CF_3$ | Me | Br | Br | H | I | H | $CF_3$ | Me |
| Cl | Br | H | OMe | H | F | Me | Br | Br | H | OMe | H | F | Me |
| Cl | Br | H | OMe | H | Cl | Me | Br | Br | H | OMe | H | Cl | Me |
| Cl | Br | H | OMe | H | Br | Me | Br | Br | H | OMe | H | Br | Me |
| Cl | Br | H | OMe | H | I | Me | Br | Br | H | OMe | H | I | Me |
| Cl | Br | H | OMe | H | OMe | Me | Br | Br | H | OMe | H | OMe | Me |
| Cl | Br | H | OMe | H | $CF_3$ | Me | Br | Br | H | OMe | H | $CF_3$ | Me |
| Cl | Br | H | $CF_3$ | H | F | Me | Br | Br | H | $CF_3$ | H | F | Me |
| Cl | Br | H | $CF_3$ | H | Cl | Me | Br | Br | H | $CF_3$ | H | Cl | Me |
| Cl | Br | H | $CF_3$ | H | Br | Me | Br | Br | H | $CF_3$ | H | Br | Me |
| Cl | Br | H | $CF_3$ | H | I | Me | Br | Br | H | $CF_3$ | H | I | Me |
| Cl | Br | H | $CF_3$ | H | OMe | Me | Br | Br | H | $CF_3$ | H | OMe | Me |
| Cl | Br | H | $CF_3$ | H | $CF_3$ | Me | Br | Br | H | $CF_3$ | H | $CF_3$ | Me |
| Cl | Br | Me | Cl | H | H | H | Br | Br | Me | Cl | H | H | H |
| Cl | Br | Me | $NO_2$ | H | H | H | Br | Br | Me | $NO_2$ | H | H | H |
| Cl | Br | Me | F | H | H | H | Br | Br | Me | F | H | H | H |
| Cl | Br | Me | F | F | F | H | Br | Br | Me | F | F | F | H |
| Cl | Br | Me | F | H | F | H | Br | Br | Me | F | H | F | H |
| Cl | Br | Me | F | H | Cl | H | Br | Br | Me | F | H | Cl | H |
| Cl | Br | Me | F | H | Br | H | Br | Br | Me | F | H | Br | H |
| Cl | Br | Me | F | H | OMe | H | Br | Br | Me | F | H | OMe | H |
| Cl | Br | Me | F | H | $CF_3$ | H | Br | Br | Me | F | H | $CF_3$ | H |
| Cl | Br | Me | Cl | H | F | H | Br | Br | Me | Cl | H | F | H |
| Cl | Br | Me | Cl | H | Br | H | Br | Br | Me | Cl | H | Br | H |
| Cl | Br | Me | Cl | H | OMe | H | Br | Br | Me | Cl | H | OMe | H |
| Cl | Br | Me | Cl | H | $CF_3$ | H | Br | Br | Me | Cl | H | $CF_3$ | H |
| Cl | Br | Me | Br | H | F | H | Br | Br | Me | Br | H | F | H |

(continued)

| R | Q | $R^2$ | T | W | V | U | R | Q | $R^2$ | T | W | V | U |
|---|---|---|---|---|---|---|---|---|---|---|---|---|---|
| Cl | Br | Me | Br | H | Cl | H | Br | Br | Me | Br | H | Cl | H |
| Cl | Br | Me | Br | H | Br | H | Br | Br | Me | Br | H | Br | H |
| Cl | Br | Me | Br | H | I | H | Br | Br | Me | Br | H | I | H |
| Cl | Br | Me | Br | H | OMe | H | Br | Br | Me | Br | H | OMe | H |
| Cl | Br | Me | Br | H | $CF_3$ | H | Br | Br | Me | Br | H | $CF_3$ | H |
| Cl | Br | Me | I | H | F | H | Br | Br | Me | I | H | F | H |
| Cl | Br | Me | I | H | Cl | H | Br | Br | Me | I | H | Cl | H |
| Cl | Br | Me | I | H | Br | H | Br | Br | Me | I | H | Br | H |
| Cl | Br | Me | I | H | I | H | Br | Br | Me | I | H | I | H |
| Cl | Br | Me | I | H | OMe | H | Br | Br | Me | I | H | OMe | H |
| Cl | Br | Me | I | H | $CF_3$ | H | Br | Br | Me | I | H | $CF_3$ | H |
| Cl | Br | Me | OMe | H | F | H | Br | Br | Me | OMe | H | F | H |
| Cl | Br | Me | OMe | H | Cl | H | Br | Br | Me | OMe | H | Cl | H |
| Cl | Br | Me | OMe | H | Br | H | Br | Br | Me | OMe | H | Br | H |
| Cl | Br | Me | OMe | H | I | H | Br | Br | Me | OMe | H | I | H |
| Cl | Br | Me | OMe | H | OMe | H | Br | Br | Me | OMe | H | OMe | H |
| Cl | Br | Me | OMe | H | $CF_3$ | H | Br | Br | Me | OMe | H | $CF_3$ | H |
| Cl | Br | Me | $CF_3$ | H | F | H | Br | Br | Me | $CF_3$ | H | F | H |
| Cl | Br | Me | $CF_3$ | H | Cl | H | Br | Br | Me | $CF_3$ | H | Cl | H |
| Cl | Br | Me | $CF_3$ | H | Br | H | Br | Br | Me | $CF_3$ | H | Br | H |
| Cl | Br | Me | $CF_3$ | H | I | H | Br | Br | Me | $CF_3$ | H | I | H |
| Cl | Br | Me | $CF_3$ | H | OMe | H | Br | Br | Me | $CF_3$ | H | OMe | H |
| Cl | Br | Me | $CF_3$ | H | $CF_3$ | H | Br | Br | Me | $CF_3$ | H | $CF_3$ | H |
| Cl | Br | Me | Cl | H | H | Me | Br | Br | Me | Cl | H | H | Me |
| Cl | Br | Me | $NO_2$ | H | H | Me | Br | Br | Me | $NO_2$ | H | H | Me |
| Cl | Br | Me | F | H | H | Me | Br | Br | Me | F | H | H | Me |
| Cl | Br | Me | F | F | F | Me | Br | Br | Me | F | F | F | Me |
| Cl | Br | Me | F | H | F | Me | Br | Br | Me | F | H | F | Me |
| Cl | Br | Me | F | H | Cl | Me | Br | Br | Me | F | H | Cl | Me |
| Cl | Br | Me | F | H | Br | Me | Br | Br | Me | F | H | Br | Me |
| Cl | Br | Me | F | H | OMe | Me | Br | Br | Me | F | H | OMe | Me |
| Cl | Br | Me | F | H | $CF_3$ | Me | Br | Br | Me | F | H | $CF_3$ | Me |
| Cl | Br | Me | Cl | H | F | Me | Br | Br | Me | Cl | H | F | Me |
| Cl | Br | Me | Cl | H | Br | Me | Br | Br | Me | Cl | H | Br | Me |
| Cl | Br | Me | Cl | H | OMe | Me | Br | Br | Me | Cl | H | OMe | Me |
| Cl | Br | Me | Cl | H | $CF_3$ | Me | Br | Br | Me | Cl | H | $CF_3$ | Me |
| Cl | Br | Me | Br | H | F | Me | Br | Br | Me | Br | H | F | Me |
| Cl | Br | Me | Br | H | Cl | Me | Br | Br | Me | Br | H | Cl | Me |
| Cl | Br | Me | Br | H | Br | Me | Br | Br | Me | Br | H | Br | Me |
| Cl | Br | Me | Br | H | I | Me | Br | Br | Me | Br | H | I | Me |
| Cl | Br | Me | Br | H | OMe | Me | Br | Br | Me | Br | H | OMe | Me |
| Cl | Br | Me | Br | H | $CF_3$ | Me | Br | Br | Me | Br | H | $CF_3$ | Me |
| Cl | Br | Me | I | H | F | Me | Br | Br | Me | I | H | F | Me |
| Cl | Br | Me | I | H | Cl | Me | Br | Br | Me | I | H | Cl | Me |
| Cl | Br | Me | I | H | Br | Me | Br | Br | Me | I | H | Br | Me |
| Cl | Br | Me | I | H | I | Me | Br | Br | Me | I | H | I | Me |
| Cl | Br | Me | I | H | OMe | Me | Br | Br | Me | I | H | OMe | Me |
| Cl | Br | Me | I | H | $CF_3$ | Me | Br | Br | Me | I | H | $CF_3$ | Me |
| Cl | Br | Me | OMe | H | F | Me | Br | Br | Me | OMe | H | F | Me |
| Cl | Br | Me | OMe | H | Cl | Me | Br | Br | Me | OMe | H | Cl | Me |

(continued)

| R | Q | $R^2$ | T | W | V | U | R | Q | $R^2$ | T | W | V | U |
|---|---|---|---|---|---|---|---|---|---|---|---|---|---|
| Cl | Br | Me | OMe | H | Br | Me | Br | Br | Me | OMe | H | Br | Me |
| Cl | Br | Me | OMe | H | I | Me | Br | Br | Me | OMe | H | I | Me |
| Cl | Br | Me | OMe | H | OMe | Me | Br | Br | Me | OMe | H | OMe | Me |
| Cl | Br | Me | OMe | H | $CF_3$ | Me | Br | Br | Me | OMe | H | $CF_3$ | Me |
| Cl | Br | Me | $CF_3$ | H | F | Me | Br | Br | Me | $CF_3$ | H | F | Me |
| Cl | Br | Me | $CF_3$ | H | Cl | Me | Br | Br | Me | $CF_3$ | H | Cl | Me |
| Cl | Br | Me | $CF_3$ | H | Br | Me | Br | Br | Me | $CF_3$ | H | Br | Me |
| Cl | Br | Me | $CF_3$ | H | I | Me | Br | Br | Me | $CF_3$ | H | I | Me |
| Cl | Br | Me | $CF_3$ | H | OMe | Me | Br | Br | Me | $CF_3$ | H | OMe | Me |
| Cl | Br | Me | $CF_3$ | H | $CF_3$ | Me | Br | Br | Me | $CF_3$ | H | $CF_3$ | Me |

The fungicides of component (b) of the compositions of the invention are selected from the group consisting of (b3) cymoxanil; and optionally also from the group consisting of:

(b1) akylenebis(dithiocarbamate) fungicides;
(b2) compounds acting at the $bc_1$ complex of the fungal mitochondrial respiratory electron transfer site;
(b6) phenylamide fungicides;
(b7) pyrimidinone fungicides;
(b8) phthalimides; and
(b9) fosetyl-aluminum.

The weight ratios of component (b) to component (a) typically is from 100:1 to 1:100, preferably is from 30:1 to 1:30, and more preferably is from 10:1 to 1:10. Of note are compositions wherein the weight ratio of component (b) to component (a) is from 10:1 1 to 1:1. Included are compositions wherein the weight ratio of component (b) to component (a) is from 9:1 to 4.5:1.

The $bc_1$ Complex Fungicides (component (b2))

Strobilurin fungicides such as azoxystrobin, kresoxim- methyl, metommostrobin/ fenominostrobin (SSF- 126), picoxystrobin, pyraclostrobin and trifloxystrobin are known to have a fungicidal mode of action which inhibits the $bc_1$ complex in the mitochondrial respiration chain (Angew. Chem. Int. Ed., 1999, 38, 1328- 1349) . Methyl (*E*)- 2- [[6- (2- cyanophenoxy)- 4- pyrimidinyl] oxy]- α- (memoxyimino) benzeneacetate (also known as azoxystrobin) is described as a $bc_1$ complex inhibitor in Biochemical Society Transactions 1993, 22, 68S. Methyl (*E*)- α- (methoxyimino)- 2- [(2- methylphenoxy) methyl] benzeneacetate (also known as kresoxim- methyl) is described as a $bc_1$ complex inhibitor in Biochemical Society Transactions 1993, 22, 64S. (*E*)- 2- [(2, 5- Dimethylphenoxy) methyl]- α- (methoxyimino)- N- methylbenzeneacetamide is described as a $bc_1$ complex inhibitor in Biochemistry and Cell Biology 1995, 85 (3), 306- 311. Other compounds that inhibit the $bc_1$ complex in the mitochondrial respiration chain include famoxadone and fenamidone.

The $bc_1$ complex is sometimes referred to by other names in the biochemical literature, including complex III of the electron transfer chain, and ubihydroquinone:cytochrome c oxidoreductase. It is uniquely identified by the Enzyme Commission number EC1.10.2.2. The $bc_1$ complex is described in, for example, J. Biol. Chem. 1989, 264, 14543-38; Methods Enzymol. 1986, 126, 253-71; and references cited therein.

Pyrimidinone Fungicides (component (b7))

Pyrimidinone fungicides include compounds of Formula II

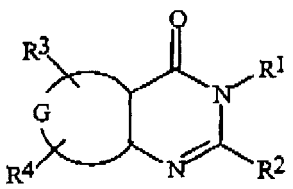

II

wherein

G is a fused phenyl, thiophene or pyridine ring;

$R^1$ is $C_1$-$C_6$ alkyl;

$R^2$ is $C_1$-$C_6$ alkyl or $C_1$-$C_6$ alkoxy;

$R^3$ is halogen; and

$R^4$ is hydrogen or halogen.

Pyrimidinone fungicides are described in International Patent Application WO94/26722, U.S. Patent No. 6,066,638, U.S. Patent No. 6,245,770, U.S. Patent No. 6,262,058 and U.S. Patent No. 6,277,858.

Of note are pyrimidinone fungicides selected from the group:

6- bromo- 3- propyl- 2- propyloxy- 4 (3*H*)- quinazolinone,
6, 8- diiodo- 3- propyl- 2- propyloxy- 4 (3*H*)- quinazalinone,
6- iodo- 3- propyl- 2- propyloxy- 4 (3*H*)- quinazolinone,
6- chloro- 2- propoxy- 3- propylthieno [2, 3- *d*] pyrimidin- 4 (3*H*)- one,
6- bromo- 2- propoxy- 3- propylthieno [2, 3- *d*] pyrimidin- 4 (3*H*)- one,
7- bromo- 2- propoxy- 3- propylthieno [3, 2- *d*] pyrimidin- 4 (3*H*)- one,
6- bromo- 2- propoxy- 3- propylpyrido [2, 3- *d*] pyrimidin- 4 (3*H*)- one,
6, 7- dibromo- 2- propoxy- 3- propylthieno [3, 2- *d*] pyrimidin- 4 (3*H*)- one, and
3- (cyclopropylmethyl)- 6- iodo- 2- (propylthio) pyrido [2, 3- *d*] pyrimidin- 4 (3*H*)- one.

Table 8

Examples of component (b)

(b1) Alkylenebis(dithiocarbamate)s such as mancozeb, maneb, propineb and zineb
(b3) Cymoxanil
(b6) Phenylamides such as metalaxyl, benalaxyl and oxadixyl
(b8) Phthalimids such as folpet or captan
(b9) Fosetyl-aluminum

Other fungicides which can be included in combination with a Formula I compound or as an additional component in combination with component (a) and component (b) are acibenzolar, benalaxyl, benomyl, blasticidin- S, Bordeaux mixture (tribasic copper sulfate), carpropamid, captafol, captan, carbendazim, chloroneb, chlorothalonil, copper oxychloride, copper salts such as copper sulfate and copper hydroxide, cyazofamid, cymoxanil, cyprodinil, (*S*)- 3, 5- dichloro-*N*- (3- chloro- 1- ethyl- 1- methyl- 2- oxopropyl)- 4- methylbenzamide (RH 7281), diclocymet (S- 2900), diclomezine, dicloran, dimethomorph, diniconazole- M, dodemorph, dodine, edifenphos, fencaramid (SZX0722), fenpiclonil, fentin acetate, fentin hydroxide, fluazinam, fludioxonil, flumetover (RPA 403397), flutolanil, folpet, fosetyl- aluminum, furalaxyl, furametapyr (S- 82658), iprobenfos, iprodione, isoprothiolane, iprovalicarb, kasugamycin, mancozeb, maneb, mefenoxam, mepronil, metalaxyl, metiram- zinc, myclobutanil, neo- asozin (ferric methanearsonate), oxadixyl, pencycuron, prochloraz, procymidone, propamocarb, propineb, pyrifenox, pyrimethanil, pyroquilon, quinoxyfen, spiroxamine, sulfur, thifluzamide, thiophanate- methyl, thiram, triadimefon, tricyclazole, validamycin, vinclozolin, zineb and zoxamid.

Descriptions of the commercially available compounds listed above may be found in The Pesticide Manual, Twelfth Edition, C.D.S. Tomlin, ed., British Crop Protection Council, 2000.

Of note are combinations of Formula I with cymoxanil for controlling grape diseases (e.g. *Plasmopara viticola*, *Botrytis cinerea* and *Uncinula necatur*).

Of note are combinations of Formula I with cymoxanil for controlling potato diseases (e.g. *Phytophthora infestans*, *Alternaria solani* and *Rhizoctonia solani*).

Of note are compositions wherein component (b) comprises at least one compound selected from (b1), for example mancozeb, and cymoxanil. Of particular note are such compositions wherein the overall weight ratio of component (b) to component (a) is from 30:1 to 1:30 and the weight ratio of component (b1) to component (a) is from 10:1 to 1:1. Included are compositions wherein the weight ratio of component (b1) to component (a) is from 9:1 to 4.5:1. Examples of these compositions include compositions comprising mixtures of component (a) (preferably a compound from Index Table A) with mancozeb and cymoxanil.

Also ofnote are compositions wherein component (b) comprises at least one compound selected from (b2), for example famoxadone, and cymoxil. Of particular note are such compositions wherein the overall weight ratio of component (b) to component (a) is from 30:1 to 1:30 and the weight ratio of component (b2) to component (a) is from 10:1 to 1:1.

Included are compositions wherein the weight ratio of component (b2) to component (a) is from 9:1 to 4.5:1. Examples of these compositions include compositions comprising mixtures of component (a) (preferably a compound from Index Table A) with famoxadone and cymoxanil.

Also of note are compositions wherein component (b) comprises the compound of (b3), in other words cymoxanil, and at least one compound selected from a second component (b) group (b1), (b2), (b6), (b7), (b8) or (b9) . Of particular note are such compositions wherein the overall weight ratio of component (b) to component (a) is from 30: 1 to 1: 30 and the weight ratio of component (b3) to component (a) is from 10: 1 to 1: 1. Included are compositions wherein the weight ratio of component (b3) to component (a) is from 9: 1 to 4.5: 1. Examples of these compositions include compositions comprising mixtures of component (a) (preferably a compound from Index Table A) with cymoxanil and a compound selected from the group consisting of famoxadone, fenamidone, azoxystrobin, kresoxim- methyl, pyraclostrobin, trifloxystrobin, mancozeb, maneb, propineb, zineb, metalaxyl, benalaxyl, oxadixyl, 6- iodo- 3- propyl- 2- propyloxy- 4 (3*H*)-quinazolinone, 6- chloro- 2- propoxy- 3- propylthieno [2, 3- *d*] pyrimidin- 4 (3*H*)- one, folpet, captan and fosetyl- aluminum.

Also of note are compositions wherein component (b) comprises at least one compound selected from (b6), for example metalaxyl, and cymoxamil. Of particular note are such compositions wherein the overall weight ratio of component (b) to component (a) is from 30:1 to 1:30 and the weight ratio of component (b6) to component (a) is from 10:1 1 to 1:3. Included are compositions wherein the weight ratio of component (b6) to component (a) is from 9:1 to 4.5: 1. Examples of these compositions include compositions comprising mixtures of component (a) (preferably a compound from Index Table A) with metalaxyl or oxadixyl and cymoxanil.

Also of note are compositions wherein component (b) comprises at least one compound selected from (b7), for example 6- iodo- 3- propyl- 2- propyloxy- 4 (3*H*)- quinazolinone or 6- chloro- 2- propoxy- 3- propylthieno [2, 3- *d*] pyrimidin- 4 (3*H*)- one, and cymoxamil. Of particular note are such compositions wherein the overall weight ratio of component (b) to component (a) is from 30: 1 to 1: 30 and the weight ratio of component (b7) to component (a) is from 1: 1 to 1: 20. Included are compositions wherein the weight ratio of component (b6) to component (a) is from 1: 4.5 to 1: 9. Examples of these compositions include compositions comprising mixtures of component (a) (preferably a compound from Index Table A) with 6- iodo- 3- propyl- 2- propyloxy- 4 (3*H*)- quinazolinone or 6- chloro- 2- propoxy- 3- propylthieno [2, 3- *d*] pyrimidin- 4 (3*H*)- one and cymoxanil.

Also of note are compositions wherein component (b) comprises the compound of (b9), in other words fosetyl-aluminum, and cymoxanil. Of particular note are such compositions wherein the overall weight ratio of component (b) to component (a) is from 30:1 to 1:30 and the weight ratio of component (b9) to component (a) is from 10:1 to 1:1. Included are compositions wherein the weight ratio of component (b9) to component (a) is from 9:1 to 4.5:1. Examples of these compositions include compositions comprising mixtures of component (a) (preferably a compound from Index Table A) with fosetyl-aluminum and cymoxanil.

Of particular note are combinations of Compound 1 or 5 with cymoxanil. Compound numbers refer to compounds in Index Table A.

Formulation/Utility

Compositions of this invention will generally be used as a formulation or composition comprising at least one carrier selected from agriculturally suitable liquid diluents, solid diluents and surfactants. The formulation or composition ingredients are selected to be consistent with the physical properties of the active ingredient, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredient can be (micro)encapsulated and further formed into a suspension or solid formulation; alternatively the entire formulation of active ingredient can be encapsulated (or "overcoated"). Encapsulation can control or delay release of the active ingredient. Sprayable formulations can be extended in suitable media and used at spray volumes from about one to several hundred liters per hectare. High-strength compositions are primarily used as intermediates for further formulation.

The formulations will typically contain effective amounts (e.g. from 0.01-99.99 weight percent) of active ingredients together with diluent and/or surfactant within the following approximate ranges which add up to 100 percent by weight.

| | Weight Percent | | |
|---|---|---|---|
| | Active Ingredients | Diluent | Surfactant |
| Water-Dispersible and Water-soluble Granules, Tablets and Powders. | 5-90 | 0-94 | 1-15 |
| Suspensions, Emulsions, Solutions (including Emulsifiable Concentrates) | 5-50 | 40-95 | 0-25 |

(continued)

| | Weight Percent | | |
|---|---|---|---|
| | Active Ingredients | Diluent | Surfactant |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., Handbook of Insecticide Dust Diluents and Carriers, 2nd Ed., Dorland Books, Caldwell, New Jersey. Typical liquid diluents are described in Marsden, Solvents Guide, 2nd Ed., Interscience, New York, 1950. McCutcheon's Detergent and Emulsifiers Annual, Allured Publ. Corp., Ridgewood, New Jersey, as well as Sisely and Wood, Encyclopedia of Surface Active Agents, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N*, *N*- dialkyltaurates, lignin sulfonates, naphthalene sulfonate formaldehyde condensates, polycarboxylates, and polyoxyethylene/ polyoxypropylene block copolymers. Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N*, *N*- dimethylformamide, dimethyl sulfoxide, *N*- alkylpyrrolidone, ethylene glycol, polypropylene glycol, paraffins, alkylbenzenes, alkylnaphthalenes, oils of olive, castor, linseed, tung, sesame, corn, peanut, cotton- seed, soybean, rape- seed and coconut, fatty acid esters, ketones such as cyclohexanone, 2- heptanone, isophorone and 4- hydroxy- 4- methyl- 2- pentanone, and alcohols such as methanol, cyclohexanol, decanol and tetrahydrofurfuryl alcohol.

Solutions, including emulsifiable concentrates, can be prepared by simply mixing the ingredients. Dusts and powders can be prepared by blending and, usually, grinding as in a hammer mill or fluid- energy mill. Suspensions are usually prepared by wet- milling; see, for example, U.S. 3, 060, 084. Preferred suspension concentrates include those containing, in addition to the active ingredient, from 5 to 20% nonionic surfactant (for example, polyethoxylated fatty alcohols) optionally combined with 50- 65% liquid diluents and up to 5% anionic surfactants. Granules and pellets can be prepared by spraying the active material upon preformed granular carriers or by agglomeration techniques. See Browning, "Agglomeration", Chemical Engineering, December 4, 1967, pp 147- 48, Perry's Chemical Engineer's Handbook, 4th Ed., McGraw- Hill, New York, 1963, pages 8- 57 and following, and WO 91/13546. Pellets can be prepared as described in U.S. 4, 172, 714. Water- dispersible and water- soluble granules can be prepared as taught in U.S. 4, 144, 050, U.S. 3, 920, 442 and DE 3, 246, 493. Tablets can be prepared as taught in U.S. 5, 180, 587, U.S. 5, 232, 701 and U.S. 5, 208, 030. Films can be prepared as taught in GB 2, 095, 558 and U.S. 3, 299, 566.

For further information regarding the art of formulation, see U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, Weed Control as a Science, John Wiley and Sons, Inc., New York, 1961, pp 81-96; and Hance et al., Weed Control Handbook, 8th Ed., Blackwell Scientific Publications, Oxford, 1989.

In the following Examples, all percentages are by weight and all formulations are prepared in conventional ways. Without further elaboration, it is believed that one skilled in the art using the preceding description can utilize the present invention to its fullest extent. The following Examples are, therefore, to be construed as merely illustrative, and not limiting of the disclosure in any way whatsoever. Percentages are by weight except where otherwise indicated.

Example A

| Wettable Powder | |
|---|---|
| Active ingredients | 65.0% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example B

| Granule | |
|---|---|
| Active ingredients | 10.0% |
| attapulgite granules (low volatile matter, 0.71/0.30 mm; U.S.S. No. 25-50 sieves) | 90.0%. |

Example C

| Extruded Pellet | |
|---|---|
| Active ingredients | 25.0% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example D

| Emulsifiable Concentrate | |
|---|---|
| Active ingredients | 20.0% |
| blend of oil soluble sulfonates and polyoxyethylene ethers | 10.0% |
| isophorone | 70.0%. |

Example E

| Suspension Concentrate | | |
|---|---|---|
| Active ingredients | | 20.0% |
| polyethoxylated fatty alcohol | nonionic surfactant | 15.0% |
| ester derivative of montan wax | | 3.0% |
| calcium lignosulfonate | anionic surfactant | 2.0% |
| polyethoxylated/polypropoxylated polyglycol block copolymer | surfactant | 1.0% |
| propylene glycol | diluent | 6.4% |
| poly(dimethylsiloxane) | antifoam agent | 0.6% |
| antimicrobial agent | | 0.1% |
| water | diluent | 51.9% |

The formulation ingredients are mixed together as a syrup, the active ingredients are added and the mixture is homogenized in a blender. The resulting slurry is then wet-milled to form a suspension concentrate.

Compositions of this invention can also be mixed with one or more insecticides, nematocides, bactericides, acaricides, growth regulators, chemosterilants, semiochemicals, repellents, attractants, pheromones, feeding stimulants or other biologically active compounds to form a multi- component pesticide giving an even broader spectrum of agricultural protection. Examples of such agricultural protectants with which compositions of this invention can be formulated are: insecticides such as abamectin, acephate, azinphos- methyl, bifenthrin, buprofezin, carbofuran, chlorfenapyr, chlorpyrifos, chlorpyrifos- methyl, cyfluthrin, beta- cyfluthrin, cyhalothrin, lambda- cyhalothrin, deltamethrin, diafenthiuron,

diazinon, diflubenzuron, dimethoate, esfenvalerate, fenoxycarb, fenpropathrin, fenvalerate, fipronil, flucythrinate, tau-fluvalinate, fonophos, imidacloprid, isofenphos, malathion, metaldehyde, methamidophos, methidathion, methomyl, methoprene, methoxychlor, methyl 7- chloro- 2, 5- dihydro- 2- [[*N*- (methoxycarbonyl)- *N*- [4- (trifluoromethoxy) phenyl] amino] carbonyl] indeno [1, 2- *e*] [1, 3, 4] oxadiazine- 4a (3*H*)- carboxylate (indoxacarb), monocrotophos, oxamyl, parathion, parathion- methyl, permethrin, phorate, phosalone, phosmet, phosphamidon, pirimicarb, profenofos, rotenone, sulprofos, tebufenozide, tefluthrin, terbufos, tetrachlorvinphos, thiodicarb, tralomethrin, trichlorfon and triflumuron; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; nematocides such as aldoxycarb and fenamiphos; and biological agents such as *Bacillus thuringiensis*, *Bacillus thuringiensis* delta endotoxin, baculovirus, and entomopathogenic bacteria, virus and fungi. The weight ratios of these various mixing partners to compounds of Formula I of this invention typically are between 100: 1 and 1: 100, preferably between 30: 1 and 1: 30, more preferably between 10: 1 and 1: 10 and most preferably between 4: 1 and 1: 4.

The compositions of this invention are useful as plant disease control agents. The present invention therefore further comprises a method for controlling plant diseases caused by fungal plant pathogens comprising applying to the plant or portion thereof to be protected, or to the plant seed or seedling to be protected, an effective amount of a compound of the invention or a fungicidal composition containing said compound. The compounds and compositions of this invention provide control of diseases caused by a broad spectrum of fungal plant pathogens in the Basidiomycete, Ascomycete, Oomycete and Deuteromycete classes. They are effective in controlling a broad spectrum of plant diseases, particularly foliar pathogens of ornamental, vegetable, field, cereal, and fruit crops. These pathogens include *Plasmopara viticola, Phytophthora infestans, Peronospora tabacina, Pseudoperonospora cubensis, Pythium aphanidermatum, Alternaria brassicae, Septoria nodorum, Septoria tritici, Cercosporidium personatum, Cercospora arachidicola, Pseudocercosporella herpotrichoides, Cercospora beticola, Botrytis cinerea, Monilinia fructicola, Pyricularia oryzae, Podosphaera leucotricha, Venturia inaequalis, Erysiphe graminis, Uncinula necatur, Puccinia recondita, Puccinia graminis, Hemileia vastatrix, Puccinia striiformis, Puccinia arachidis, Rhizoctonia solani, Sphaerotheca fuliginea, Fusarium oxysporum, Verticillium dahliae, Pythium aphanidermatum, Phytophthora megasperma, Sclerotinia sclerotiorum, Sclerotium rolfsii, Erysiphe polygoni, Pyrenophora teres, Gaeumannomyces graminis, Rynchosporium secalis, Fusarium roseum, Bremia lactucae* and other generea and species closely related to these pathogens. The compositions of the invention are especially effective in controlling *Plasmopara viticola* on grapes and *Phytophthora infestans* on potatoes and tomatoes.

Plant disease control is ordinarily accomplished by applying an effective amount of a compound of this invention either pre- or post-infection, to the portion of the plant to be protected such as the roots, stems, foliage, fruit, seeds, tubers or bulbs, or to the media (soil or sand) in which the plants to be protected are growing. The compounds can also be applied to the seed to protect the seed and seedling.

Rates of application for these compounds can be influenced by many factors of the environment and should be determined under actual use conditions. Foliage can normally be protected when treated at a rate of from less than 1 g/ha to 5,000 g/ha of active ingredient. Seed and seedlings can normally be protected when seed is treated at a rate of from 0.1 to 10 g per kilogram of seed.

Synergism has been described as "the cooperative action of two components of a mixture, such that the total effect is greater or more prolonged than the sum of the effects of the two (or more) taken independently" (see Tames, P. M. L., Neth. J. Plant Pathology, 1964, 70, 73-80). It is found that compositions containing the compound of Formula I and fungicides with a different mode of action exhibit synergistic effects.

The presence of a synergistic effect between two active ingredients (e.g. componet (a) and component (b)) is established with the aid of the Colby equation (see Colby, S. R. In Calculating Synergistic and Antagonistic Responses of Herbicide Combinations, Weeds, 1967, 15, 20-22):

$$p = A + B - \left[ \frac{A \times B}{100} \right]$$

Using the methods of Colby, the presence of a synergistic interaction between two active ingredients is established by first calculating the predicted activity, p, of the mixture based on activities of the two components applied alone. If p is lower than the experimentally established effect, synergism has occurred. In the equation above, A is the fungicidal activity in percentage control of one component applied alone at rate x. The B term is the fungicidal activity in percentage control of the second component applied at rate y. The equation estimates p, the fungicidal activity of the mixture of A at rate x with B at rate y if their effects are strictly additive and no interaction has occurred.

The following TESTS can be used to demonstrate the control efficacy of compositions of this invention on specific pathogens. The pathogen control protection afforded by the compositions is not limited, however, to these

species. See Index Tables A for compound designations for component (a) compounds used in the TESTS.

Index Table A

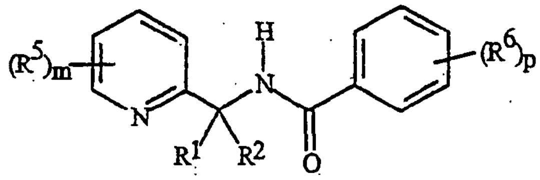

| Cmpd No. | $(R^5)_m$ | $R^1$ | $R^2$ | $(R^6)_p$ | m.p.(°C) |
|---|---|---|---|---|---|
| 1 | 3-Cl-5-$CF_3$ | H | H | 2,6-di-Cl | 164-168 |
| 2 | 3-Cl-5-$CF_3$ | H | $CH_3$ | 2,6-di-Cl | |
| 3 | 3-Cl-5-$CF_3$ | H | H | 2,6-di-Cl-4-$CH_3$ | |
| 4 | 3-Cl-5-$CF_3$ | H | $CH_3$ | 2,6-di-Cl-4-$CH_3$ | |
| 5 | 3,5-di-Cl | H | H | 2,6-di-Cl | |
| 6 | 3,5-di-Cl | H | $CH_3$ | 2,6-di-Cl | |
| 7 | 3,5-di-Cl | H | H | 2,6-di-Cl-4-$CH_3$ | |
| 8 | 3,5-di-Cl | H | $CH_3$ | 2,6-di-Cl-4-$CH_3$ | |

BIOLOGICAL EXAMPLES OF THE INVENTION

The following TESTS demonstrate the control efficacy of compositions of this invention on specific pathogens. The pathogen control protection afforded by the compounds is not limited, however, to these species.

Test suspensions comprising a single active ingredient are sprayed to demonstrate the control efficacy of the active ingredient individually. To demonstrate the control efficacy of a combination, (a) the active ingredients can be combined in the appropriate amounts in a single test suspension, (b) stock solutions of individual active ingredients can be prepared and then combined in the appropriate ratio, and diluted to the final desired concentration to form a test suspension or (c) test suspensions comprising single active ingredients can be sprayed sequentially in the desired ratio.

Composition 1

| Ingredients | Wt.% |
|---|---|
| Compound 1 Technical Material | 20 |
| Polyethoxylated stearyl alcohol | 15 |
| Montan wax ester | 3 |
| Desugared calcium lignosulfate | 2 |
| Polyoxypropylene-polyoxyethylene block copolymer | 1 |
| Propylene Glycol | 6.4 |
| Polyorganosiloxanes + emulsifying agent | 0.6 |
| 19% (1,2-benzisothiazolin-3-one) in aqueous dipropylene glycol | 0.1 |
| Water | 51.9 |

Composition 3

| Ingredients | Wt. % |
|---|---|
| Cymoxanil Technical Material | 61.9 |
| Sodium alkylnaphthalene sulfonate formaldehyde condensate | 5.0 |
| Sodium alkylnaphthalene sulfonate | 1.0 |
| Polyvinyl pyrrolidone | 4.0 |
| Monosodium phosphate | 4.0 |
| Fumaric acid | 1.0 |
| Fumed silica | 1.0 |
| Sodium | 0.2 |
| Sugar | 14.0 |
| Sodium lignosulfate | 7.9 |

Test compositions were first mixed with purified water containing 250 ppm of the surfactant Trem® 014 (polyhydric alcohol esters). The resulting test suspensions were then used in the following tests. Test suspensions were sprayed to the point of run-off on the test plants at the equivalent rates of 5, 10, 20, 25, 50 or 100 g/ha of active ingredient. Spraying a 40 ppm test suspension to the point of run-off on the test plants is the equivalent of a rate of 100 g/ha. The tests were replicated three times and the results reported as the average of the three replicates.

TEST A (Preventive Control)

The test suspensions were sprayed to the point of run-off on Potato seedlings. The following day the seedlings were inoculated with a spore suspension of *Phytophthora infestans* (the causal agent of tomato and potato late blight) and incubated in a saturated atmosphere at 20°C for 24 hours, and then moved to a growth chamber at 20 °C for 5 days, after which disease ratings were made.

TEST B (Curative Control)

Potato seedlings were inoculated with a spore suspension of *Phytophthora infestans* (the causal agent of tomato and potato late blight) 24 hours prior to application and incubated in a saturated atmosphere at 20°C for 24 hours. The test suspensions were then sprayed to the point of run-off on the potato seedlings. The following day the seedlings were moved to a growth chamber at 20°C for 5 days, after which disease ratings were made.

TEST C (Extended Preventive Control)

The test suspensions was sprayed to the point of run-off on potato seedlings. Six days later, the seedlings were inoculated with a spore suspension of *Phytophthora infestans* (the causal agent of tomato and potato late blight) and incubated in a saturated atmosphere at 20 °C for 24 h, and then moved to a growth chamber at 20 °C for 5 days, after which disease ratings were made.

Results for Tests A-C are given in Table A. In the table, a rating of 100 indicates 100% disease control and a rating of 0 indicates no disease control (relative to the controls). Columns labeled Avg indicates the average of three replications. Columns labeled Exp indicate the expected value for each treatment mixture using the Colby equation. Tests demonstrating control greater than expected are indicated with*.

Table A

| Composition | | Test A | | Test B | | Test C | |
|---|---|---|---|---|---|---|---|
| Number | Rate | Avg | Exp | Avg | Exp | Avg | Exp |
| 1 | 5 | 0 | xx | 0 | xx | 0 | xx |
| 1 | 10 | 32 | xx | 0 | xx | 37 | xx |
| 1 | 20 | 100 | xx | 0 | xx | 98 | xx |
| 3 | 25 | 0 | xx | 0 | xx | 0 | xx |
| 3 | 50 | 0 | xx | 0 | xx | 0 | xx |
| 3 | 100 | 32 | xx | 0 | xx | 0 | xx |
| 1 + 3 | 5 + 25 | 0 | 0 | 0 | 0 | 37* | 0 |
| 1 + 3 | 10 + 50 | 100* | 32 | 0 | 0 | 88* | 37 |
| 1 + 3 | 20 + 100 | 100 | 100 | 9 | 0 | 76 | 98 |

Based on the description of synergism developed by Colby, compositions of the present invention are illustrated to be synergistically useful. Moreover, compositions comprising components (a) and (b) alone can be conveniently mixed with an optional diluent prior to applying to the crop to be protected. Accordingly, this invention provides an improved method of combating fungi, particularly fungi of the class Oomycetes such as *Phytophthora* spp- and *Plasmopara* spp., in crops, especially potatoes, grapes and tomatoes.

## Claims

1. A composition for controlling plant diseases caused by fungal plant pathogens comprising:

(a) at least one compound of Formula I, *N*-oxides and agriculturally suitable salts thereof

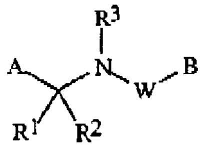

I

wherein
A is a substituted pyridinyl ring;
B is a substituted phenyl ring;
W is C=L or $SO_n$;
L is O or S;
$R^1$ and $R^2$ are each independently H; or $C_1$-$C_6$ alkyl, $C_2$-$C_6$ alkenyl, $C_2$-$C_6$ alkynyl or $C_3$-$C_6$ cycloalkyl, each optionally substituted;
$R^3$ is H; or $C_1$-$C_6$ alkyl, $C_2$-$C_6$ alkyl, $C_2$-$C_6$ alkynyl, $C_3$-$C_6$ cycloalkyl, $C_2$-$C_{10}$ alkoxyalkyl, $C_2$-$C_6$ alkylcarbonyl, $C_2$-$C_6$ alkoxycarbonyl, $C_2$-$C_6$ alkylaminocarbonyl or $C_3$-$C_8$ dialkylaminocarbonyl; and
n is 1 or 2; and
(b) at least one compound selected from the group consisting of (b3) cymoxanil; and optionally at least one compound selected from the group consisting of:

(b1) alkylenebis(dithiocarbamate) fungicides;
(b2) compounds acting at the $bc_1$ complex of the fungal mitochondrial respiratory electron transfer site;
(b6) phenylamide fungicides;
(b7) pyrimidinone fungicides;
(b8) phthalimides; and
(b9) fosetyl-aluminum.

2. A composition of Claim 1 in which component (a) is a compound of Formula I wherein
A is a pyridinyl ring substituted with from 1 to 4 $R^5$;
B is a phenyl ring substituted with from I to 4 $R^6$;
W is C=O;
$R^1$ and $R^2$ are each independently H; or $C_1$- $C_6$ alkyl, $C_2$- $C_6$ alkenyl, $C_2$- $C_6$ alkynyl or $C_3$- $C_6$ cycloalkyl, each optionally substituted with one or more substituents selected from the group consisting of halogen, CN, $NO_2$, hydroxy, $C_1$- $C_4$ alkoxy, $C_1$- $C_4$ alkylthio, $C_1$- $C_4$ alkylsulfinyl, $C_1$- $C_4$ alkylsulfonyl, $C_2$- $C_4$ alkoxycarbonyl, $C_1$- $C_4$ alkylamino, $C_2$- $C_8$ dialkylamino and $C_3$- $C_6$ cycloalkylamino;
$R^3$ is H; and
each $R^5$ and $R^6$ is independently $C_1$- $C_6$ alkyl, $C_2$- $C_6$ alkenyl, $C_2$- $C_6$ alkynyl, $C_3$- $C_6$ cycloalkyl, $C_1$- $C_6$ haloalkyl, $C_2$- $C_6$ haloalkenyl, $C_2$- $C_6$ haloalkynyl, $C_3$- $C_6$ halocycloalkyl, halogen, CN, $CO_2H$, $CONH_2$, $NO_2$, hydroxy, $C_1$- $C_4$ alkoxy, $C_1$- $C_4$ haloalkoxy, $C_1$- $C_4$ alkylthio, $C_1$- $C_4$ alkylsulfinyl, $C_1$- $C_4$ alkylsulfonyl, $C_1$- $C_4$ haloalkylthio, $C_1$- $C_4$ haloalkylsulfinyl, $C_1$- $C_4$ haloalkylsulfonyl, $C_1$- $C_4$ alkylamino, $C_2$- $C_8$ dialkylamino, $C_3$- $C_6$ cycloalkylamino, $C_2$- $C_6$ alkylcarbonyl, $C_2$- $C_6$ alkoxycarbonyl, $C_2$- $C_6$ alkylaminocarbonyl, $C_3$- $C_8$ dialkylaminocarbonyl or $C_3$- $C_6$ trialkylsilyl; or each $R^5$ and $R^6$ is independently a phenyl, a benzyl, a phenoxy, a 5- or 6- membered heteroaromatic ring or a 5- or 6- membered nonaromatic heterocyclic ring, each ring optionally substituted with loin one to three substituents independently selected from $R^7$; or

two $R^6$ attached to contiguous carbon atoms are taken together with said carbon atoms to form a fused phenyl ring, a fused 5- or 6- membered nonaromatic carbocyclic ring, a fused 5- or 6- membered heteroaromatic ring or a fused 5- or 6- membered nonaromatic heterocyclic ring, each fused ring optionally substituted with from one to three substituents independently selected from $R^7$;
each $R^7$ is independently $C_1$- $C_4$ alkyl, $C_2$- $C_4$ alkenyl, $C_2$- $C_4$ alkynyl, $C_3$- $C_6$ cycloalkyl, $C_1$- $C_4$ haloalkyl, $C_2$- $C_4$ haloalkenyl, $C_2$- $C_4$ haloalkynyl, $C_3$- $C_6$ halocycloalkyl, halogen, CN, $NO_2$, $C_1$- $C_4$ alkoxy, $C_1$- $C_4$ haloalkoxy, $C_1$- $C_4$ alkylthio, $C_1$- $C_4$ alkylsulfinyl, $C_1$- $C_4$ alkylsulfonyl, $C_1$- $C_4$ alkylamino, $C_2$- $C_8$ dialkylamino, $C_3$- $C_6$ cycloalkylamino, $C_3$- $C_6$ (alkyl) cycloalkylamino, $C_2$- $C_4$ alkylcarbonyl, $C_2$- $C_6$ alkoxycarbonyl, $C_2$- $C_6$ alkylaminocarbonyl, $C_3$- $C_8$ dialkylaminocarbonyl or $C_3$- $C_6$ trialkylsilyl.

**3.** The composition of Claim 1 or Claim 2 wherein component (b) comprises cymoxanil and at least one compound selected from (b1), (b2), (b6), (b7), (b8) or (b9); wherein the overall weight ratio of component (b) to component (a) is from 30:1 to 1:30; and wherein the weight ratio of cymoxanil to component (a) is from 10:1 1 to 1:1.

**4.** The composition of any of Claims 1 to 3, wherein component (a) is 2, 6- dichloro- *N*- [[3- chloro- 5- (trifluoromethyl)- 2- pyridinyl] methyl] benzamide.

**5.** A method for controlling plant diseases caused by fungal plant pathogens comprising applying to the plant or portion thereof, or to the plant seed or seedling, a fungicidally effective amount of a composition of any of Claims 1 to 4.

**6.** The method of Claim 5 wherein the disease to be controlled is caused by the fungal pathogen *Phytophthora infestans*.

**7.** The method of Claim 5 wherein the disease to be controlled is caused by the fungal pathogen *Plasmopara viticola*.

**Patentansprüche**

**1.** Zusammensetzung zur Bekämpfung von durch fungale Pflanzenpathogene verursachte Pflanzenkrankheiten, umfassend:

(a) mindestens eine Verbindung der Formel I, *N*- Oxide und landwirtschaftlich geeignete Salze davon

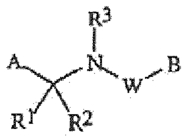

I

wobei
A ein substituierter Pyridinylring ist;
B ein substituierter Phenylring ist;
W C=L oder $SO_n$ ist;
L O oder S ist;
$R^1$ und $R^2$ jeweils unabhängig Folgendes sind: H; oder $C_1$- $C_6$- Alkyl, $C_2$- $C_6$- Alkenyl, $C_2$- $C_6$- Alkinyl oder $C_3$- $C_6$- Cycloalkyl, jeweils gegebenenfalls substituiert;
$R^3$ Folgendes ist: H; oder $C_1$- $C_6$- Alkyl, $C_2$- $C_6$- Alkenyl, $C_2$- $C_6$- Alkinyl, $C_3$- $C_6$- Cycloalkyl, $C_2$- $C_{10}$- Alkoxyalkyl, $C_2$- $C_6$- Alkylcarbonyl, $C_2$- $C_6$- Alkoxycarbonyl, $C_2$- $C_6$- Alkylaminocarbonyl oder $C_3$- $C_8$- Dialkylaminocarbonyl; und
n 1 oder 2 ist; und
(b) mindestens eine Verbindung, die aus der Gruppe ausgewählt ist, bestehend aus (b3) Cymoxanil; und gegebenenfalls mindestens einer Verbindung, die aus der Gruppe ausgewählt ist, bestehend aus:

(b1) Alkylenbis (dithiocarbamat)- Fungiziden;
(b2) Verbindungen, die am $bc_1$-Komplex der fungalen mitochondrialen respiratorischen Elektronenübertragungsstelle wirken;
(b6) Phenylamid-Fungiziden;

(b7) Pyrimidinon-Fungiziden;
(b8) Phthalimiden; und
(b9) Fosetyl-Aluminium.

**2.** Zusammensetzung nach Anspruch 1, wobei Komponente (a) eine Verbindung der Formel I ist,
wobei
A ein Pyridinylring, substituiert mit von 1 bis 4 $R^5$ ist;
B ein Phenylring, substituiert mit von 1 bis 4 $R^6$ ist;
W C=O ist;
$R^1$ und $R^2$ jeweils unabhängig Folgendes sind: H; oder $C_1$- $C_6$- Alkyl, $C_2$- $C_6$- Alkenyl, $C_2$- $C_6$- Alkinyl oder $C_3$- $C_6$-Cycloalkyl, jeweils gegebenenfalls substituiert mit einem oder mehr Substituenten, der/die aus der Gruppe ausgewählt ist/ sind, bestehend aus Halogen, CN, $NO_2$, Hydroxy, $C_1$- $C_4$- Alkoxy, $C_1$- $C_4$- Alkylthio, $C_1$- $C_4$- Alkylsulfinyl, $C_1$- $C_4$- Alkylsulfonyl, $C_2$- $C_4$- Alkoxycarbonyl, $C_1$- $C_4$- Alkylamino, $C_2$- $C_8$- Dialkylamino und $C_3$- $C_6$- Cycloalkylamino;
$R^3$ H ist; und
jedes $R^5$ und $R^6$ unabhängig $C_1$- $C_6$- Alkyl, $C_1$- $C_6$- Alkenyl, $C_2$- $C_6$- Alkinyl, $C_3$- $C_6$- Cycloalkyl, $C_1$- $C_6$- Halogenalkyl, $C_2$- $C_6$- Halogenalkenyl, $C_2$- $C_6$- Halogenalkinyl, $C_3$- $C_6$- Halogencycloalkyl, Halogen, CN, $CO_2H$, $CONH_2$, $NO_2$, Hydroxy, $C_1$- $C_4$- Alkoxy, $C_1$- $C_4$- Halogenalkoxy, $C_1$- $C_4$- Alkylthio, $C_1$- $C_4$- Alkylsulfinyl, $C_1$- $C_4$- Alkylsulfonyl, $C_1$-$C_4$- Halogenalkylthio, $C_1$- $C_4$- Halogenalkylsulfinyl, $C_1$- $C_4$- Halogenalkylsulfonyl, $C_1$- $C_4$- Alkylamino, $C_2$- $C_8$- Dialkylamino, $C_3$- $C_6$- Cycloalkylamino, $C_2$- $C_6$- Alkylcarbonyl, $C_2$- $C_6$- Alkoxycarbonyl, $C_2$- $C_6$- Alkylaminocarbonyl, $C_3$-$C_8$- Dialkylaminocarbonyl oder $C_3$- $C_6$- Trialkylsilyl ist; oder
jedes $R^5$ und $R^6$ unabhängig ein Phenyl, ein Benzyl, ein Phenoxy, ein 5- oder 6- gliedriger heteroaromatischer Ring oder ein 5- oder 6- gliedriger nicht aromatischer heterocyclischer Ring ist, wobei jeder Ring gegebenenfalls mit von einem bis drei Substituenten substituiert ist, der/die unabhängig aus $R^7$ ausgewählt ist/ sind oder
zwei $R^6$, an benachbarte Kohlenstoffatome angelagert, zusammengenommen sind mit den Kohlenstoffatomen zur Bildung eines kondensierten Phenyltings, eines kondensierten 5- oder 6- gliedrigen nicht aromatischen carbocyclischen Rings, eines kondensierten 5- oder 6- gliedrigen heteroaromatischen Rings oder eines kondensierten 5- oder 6- gliedrigen nicht aromatischen heterocyclischen Rings, wobei jeder kondensierte Ring gegebenenfalls mit von einem bis drei Substituenten substituiert ist, der/die unabhängig aus $R^7$ ausgewählt ist/ sind;
jedes $R^7$ unabhängig $C_1$- $C_4$- Alkyl, $C_2$- $C_4$- Alkenyl, $C_2$- $C_4$- Alkinyl, $C_3$- $C_6$- Cycloalkyl, $C_1$- $C_4$- Halogenalkyl, $C_2$-$C_4$- Halogenalkenyl, $C_2$- $C_4$- Halogenalkinyl, $C_3$- $C_6$- Halogencycloalkyl, Halogen, CN, $NO_2$, $C_1$- $C_4$- Alkoxy, $C_1$- $C_4$-Halogenalkoxy, $C_1$- $C_4$- Alkylthio, $C_1$- $C_4$- Alkylsulfinyl, $C_1$- $C_4$- Alkylsulfonyl, $C_1$- $C_4$- Alkylamino, $C_2$- $C_8$- Dialkylamino, $C_3$- $C_6$- Cycloalkylamino, $C_3$- $C_6$- (Akyl) cycloalkylamino, $C_2$- $C_4$- Alkylcarbonyl, $C_2$- $C_6$- Alkoxycarbonyl, $C_2$- $C_6$-Alkylaminocarbonyl, $C_3$- $C_8$- Dialkylaminocarbonyl oder $C_3$- $C_6$- Trialkylsilyl ist.

**3.** Zusammensetzung nach Anspruch 1 oder Anspruch 2, wobei die Komponente (b) Folgendes umfasst: Cymoxanil und mindestens eine Verbindung, die aus (b1), (b2), (b6), (b7), (b8) oder (b9) ausgewählt ist; wobei das Gesamtgewichtsverhältnis von Komponente (b) zu Komponente (a) von 30:1 bis 1:30 beträgt; und wobei das Gewichtsverhältnis von Cymoxanil zu Komponente (a) von 10:1 bis 1:1 beträgt.

**4.** Zusammensetzung nach einem der Ansprüche 1 bis 3, wobei Komponente (a) 2, 6- Dichlor- *N*- [[3- chlor- 5- (trifluormethyl)- 2- pyridinyl] methyl] benzamid ist.

**5.** Verfahren zur Bekämpfung von durch fungale Pflanzenpathogene verursachte Pflanzenkrankheiten, umfassend die Applikation auf die Pflanze oder einen Anteil davon, oder auf den Pflanzensamen oder -sämling, einer fungizid wirksamen Menge einer Zusammensetzung nach einem der Ansprüche 1 bis 4.

**6.** Verfahren nach Anspruch 5, wobei die zu bekämpfende Krankheit durch das fungale Pathogen *Phytophthora infestans* verursacht wird.

**7.** Verfahren nach Anspruch 5, wobei die zu bekämpfende Krankheit durch das fungale Pathogen *Plasmopara viticola* verursacht wird.

**Revendications**

**1.** Composition pour lutter contre des maladies de plante entraînées par des pathogènes de plante fongiques comprenant:

(a) au moins un composé de la Formule I, des N-oxydes et des sels appropriés pour l'agriculture de celui-ci:

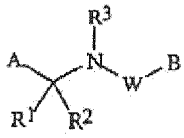

I

dans laquelle:

A est un cycle de pyridinyle substitué;
B est un cycle de phényle substitué;
W est C=L ou $SO_n$;
L est O ou S;
$R^1$ et $R^2$ sont chacun indépendamment H; ou un alkyle $C_1$-$C_6$, un alcényle $C_2$-$C_6$, un alcynyle $C_2$-$C_6$ ou un cycloalkyle $C_3$-$C_6$, chacun étant optionnellement substitué;
$R^3$ est H; ou un alkyle $C_1$-$C_6$, un alcényle $C_2$-$C_6$, un alcynyle $C_2$-$C_6$, un cycloalkyle $C_3$-$C_6$, un alcoxyalkyle $C_2$-$C_{10}$, un alkylcarbonyle $C_2$-$C_6$, un alcoxycarbonyle $C_2$-$C_6$, un alkylaminocarbonyle $C_2$-$C_6$ ou un dialkylaminocarbonyle $C_3$-$C_8$; et
n est 1 ou 2; et

(b) au moins un composé choisi dans le groupe constitué de (b3) cymoxanil; et optionnellement au moins un composé choisi dans le groupe constitué de:

(b1) fongicides d'alkylènebis(dithiocarbamate);
(b2) composés agissant au niveau du complexe *$bc_1$* du site de transfert d'électrons respiratoire mitochondrial fongique;
(b6) fongicides de phénylamide;
(b7) fongicides de pyrimidinone;
(b8) phtalimides; et
(b9) fosétyl-aluminium.

**2.** Composition selon la revendication 1, dans laquelle le composant (a) est un composé de la Formule I, dans laquelle:

A est un cycle de pyridinyle substitué avec de 1 à 4 $R^5$;
B est un cycle de phényle substitué avec de 1 à 4 $R^6$;
W est C=O;
$R^1$ et $R^2$ sont chacun indépendamment H; ou un alkyle $C_1$-$C_6$, un alcényle $C_2$-$C_6$, un alcynyle $C_2$-$C_6$ ou un cycloalkyle $C_3$-$C_6$, chacun étant optionnellement substitué avec un ou plusieurs substituants choisis dans le groupe constitué de: un halogène, CN, $NO_2$, un hydroxy, un alcoxy $C_1$-$C_4$, un alkylthio $C_1$-$C_4$, un alkylsulfinyle $C_1$-$C_4$, un alkylsulfonyle $C_1$-$C_4$, un alcoxycarbonyle $C_2$-$C_4$, un alkylamino $C_1$-$C_4$, un dialkylamino $C_2$-$C_8$ et un cycloalkylamino $C_3$-$C_6$;
$R^3$ est H; et
chaque $R^5$ et $R^6$ est indépendamment un alkyle $C_1$-$C_6$, un alcényle $C_2$-$C_6$, un alcynyle $C_2$-$C_6$, un cycloalkyle $C_3$-$C_6$, un haloalkyle $C_1$-$C_6$, un haloalcényle $C_2$-$C_6$, un haloalcynyle $C_2$-$C_6$, un halocycloalkyle $C_3$-$C_6$, un halogène, CN, $CO_2H$, $CONH_2$, $NO_2$, un hydroxy, un alcoxy $C_1$-$C_4$, un haloalcoxy $C_1$-$C_4$, un alkylthio $C_1$-$C_4$, un alkylsulfinyle $C_1$-$C_4$, un alkylsulfonyle $C_1$-$C_4$, un haloalkylthio $C_1$-$C_4$, un haloalkylsulfinyle $C_1$-$C_4$, un haloalkylsulfonyle $C_1$-$C_4$, un alkylamino $C_1$-$C_4$, un dialkylamino $C_2$-$C_8$, un cycloalkylamino $C_3$-$C_6$, un alkylcarbonyle $C_2$-$C_6$, un alcoxycarbonyle $C_2$-$C_6$, un alkylaminocarbonyle $C_2$-$C_6$, un dialkylaminocarbonyle $C_3$-$C_8$ ou un trialkylsilyle $C_3$-$C_6$; ou
chaque $R^5$ et $R^6$ est indépendamment un phényle, un benzyle, un phénoxy, un cycle hétéroaromatique de 5 ou 6 membres ou un cycle hétérocyclique non aromatique de 5 ou 6 membres, chaque cycle étant optionnellement substitué avec de un à trois substituants indépendamment choisis parmi $R^7$; ou
deux $R^6$ attachés à des atomes de carbone contigus sont pris ensemble avec lesdits atomes de carbone pour former un cycle de phényle condensé, un cycle carbocyclique non aromatique de 5 ou 6 membres condensé,

un cycle hétéroaromatique de 5 ou 6 membres condensé ou un cycle hétérocyclique non aromatique de 5 ou 6 membres condensé, chaque cycle condensé étant optionnellement substitué avec de un à trois substituants indépendamment choisis parmi $R^7$;

chaque $R^7$ est indépendamment un alkyle $C_1$-$C_4$, un alcényle $C_2$-$C_4$, un alcynyle $C_2$-$C_4$, un cycloalkyle $C_3$-$C_6$, un haloalkyle $C_1$-$C_4$, un haloalcényle $C_2$-$C_4$, un haloalcynyle $C_2$-$C_4$, un halocycloalkyle $C_3$-$C_6$, un halogène, CN, $NO_2$, un alcoxy $C_1$-$C_4$, un haloalcoxy $C_1$-$C_4$, un alkylthio $C_1$-$C_4$, un alkylsulfinyle $C_1$-$C_4$, un alkylsulfonyle $C_1$-$C_4$, un alkylamino $C_1$-$C_4$, un dialkylamino $C_2$-$C_8$, un cycloalkylamino $C_3$-$C_6$, un (alkyl)cycloalkylamino $C_3$-$C_6$, un alkylcarbonyle $C_2$-$C_4$, un alcoxycarbonyle $C_2$-$C_6$, un alkylaminocarbonyle $C_2$-$C_6$, un dialkylaminocarbonyle $C_3$-$C_8$ ou un trialkylsilyle $C_3$-$C_6$.

**3.** Composition selon la revendication 1 ou la revendication 2, dans laquelle le composant (b) comprend du cymoxanil et au moins un composé choisi parmi (b1), (b2), (b6), (b7), (b8) ou (b9); dans laquelle le rapport en poids global du composant (b) sur le composant (a) est de 30:1 à 1:30; et dans laquelle le rapport en poids du cymoxanil sur le composant (a) est de 10:1 à 1:1.

**4.** Composition selon l'une quelconque des revendications 1 à 3, dans laquelle le composant (a) est le 2, 6- dichloro-N- [[3- chloro- 5- (trifluorométhyl)- 2- pyridinyl] méthyl] benzamide.

**5.** Procédé pour lutter contre des maladies de plante entraînées par des pathogènes de plante fongiques comprenant l'application sur la plante ou une portion de celle-ci, ou sur la semence ou le semis de plante, d'une quantité à effet fongicide d'une composition selon l'une quelconque des revendications 1 à 4.

**6.** Procédé selon la revendication 5, dans lequel la maladie à combattre est entraînée par le pathogène fongique *Phytophthora infestans*.

**7.** Procédé selon la revendication 5, dans lequel la maladie à combattre est entraînée par le pathogène fongique *Plasmopara viticola*.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9942447 A
- WO 0216322 A
- GB 1470740 A
- WO 9740686 A
- WO 9426722 A
- US 6066638 A
- US 6245770 B
- US 6262058 B
- US 6277858 B
- US 3060084 A
- WO 9113546 A
- US 4172714 A
- US 4144050 A
- US 3920442 A
- DE 3246493
- US 5180587 A
- US 5232701 A
- US 5208030 A
- GB 2095558 A
- US 3299566 A
- US 3235361 A
- US 3309192 A
- US 2891855 A


### Non-patent literature cited in the description


- **TAMES, P. M. L.** *Neth. J. Plant Pathology,* 1964, vol. 70, 73-80
- *IP. Com Journal,* 2001, vol. 1 (7), 4799D
- **GRABSKI et al.** *Crop Protection,* 1987, vol. 6 (1), 64-71
- **T. L. GILCHRIST.** Comprehensive Organic Synthesis. Pergamon Press, vol. 7, 748-750
- **M. TISLER ; B. STANOVNIK.** Comprehensive Heterocyclic Chemistry. Pergamon Press, vol. 3, 18-20
- **M. R GRIMMETT ; B. R. T. KEENE.** Advances in Heterocyclic Chemistry. Academic Press, vol. 43, 149-161
- **M. TISLER ; B. STANOVNIK.** Advances in Heterocyclic Chemistry. Academic Press, vol. 9, 285-291
- **G. W. H. CHEESEMAN ; E. S. G. WERSTIUK.** Advances in Heterocyclic Chemistry. Academic Press, vol. 22, 390-392
- *Angew. Chem. Int. Ed.,* 1999, vol. 38, 1328-1349
- *Biochemical Society Transactions,* 1993, vol. 22, 68S
- *Biochemical Society Transactions,* 1993, vol. 22, 64S
- *Biochemistry and Cell Biology,* 1995, vol. 85 (3), 306-311
- *J. Biol. Chem.,* 1989, vol. 264, 14543-38
- *Methods Enzymol.,* 1986, vol. 126, 253-71
- The Pesticide Manual. British Crop Protection Council, 2000
- **WATKINS et al.** Handbook of Insecticide Dust Diluents and Carriers. Dorland Books
- **MARSDEN.** Solvents Guide. Interscience, 1950
- McCutcheon's Detergent and Emulsifiers Annual. Allured Publ. Corp,
- **SISELY ; WOOD.** Encyclopedia of Surface Active Agents. Chemical Publ. Co., Inc, 1964
- Agglomeration. **BROWNING.** Chemical Engineering. 04 December 1967, 147-48
- Perry's Chemical Engineer's Handbook. McGraw-Hill, 1963, 8-57
- **KLINGMAN.** Weed Control as a Science. John Wiley and Sons, Inc, 1961, 81-96
- **HANCE et al.** Weed Control Handbook. Blackwell Scientific Publications, 1989
- **TAMES, P. M. L. ; NETH. J.** *Plant Pathology,* 1964, vol. 70, 73-80
- **COLBY, S. R.** Calculating Synergistic and Antagonistic Responses of Herbicide Combinations. *Weeds,* 1967, vol. 15, 20-22